# EUROPEAN PATENT SPECIFICATION

(11) **EP 3 033 670 B1**
(45) Date of publication and mention of the grant of the patent: **06.11.2019**
(21) Application number: 14759362.8
(22) Date of filing: 04.08.2014
(51) Int. Cl.: G06F 9/30, G06F 9/38

(54) **VECTOR ACCUMULATION METHOD AND APPARATUS**
VEKTORAKKUMULATIONSVERFAHREN UND -VORRICHTUNG
PROCÉDÉ ET APPAREIL DE CUMUL VECTORIEL

(30) Priority: 14.08.2013 US 201313967191
(43) Date of publication of application: 22.06.2016
(73) Proprietor: Qualcomm Incorporated, San Diego, CA 92121-1714 (US)
(72) Inventor: INGLE, Ajay Anant, San Diego, California 92121-1714 (US); HOFFMAN, Marc Murray, San Diego, California 92121-1714 (US); MATHEW, Deepak, San Diego, California 92121-1714 (US); ZENG, Mao, San Diego, California 92121-1714 (US)
(74) Representative: Tomkins & Co
(86) International application number: PCT/US2014/049604
(87) International publication number: WO 2015/023465

(56) References cited:
- EP-A1- 2 455 854
- EP-A2- 1 329 815
- WO-A1-2009/144683
- WO-A1-2013/095631
- US-A- 5 845 112
- US-A1- 2004 078 404
- US-A1- 2004 123 076
- US-A1- 2004 193 847
- US-A1- 2004 210 616
- US-A1- 2005 021 578
- US-A1- 2006 041 610
- US-A1- 2009 249 028
- US-A1- 2011 161 624
- US-B1- 6 324 638
- US-B1- 6 418 529
- US-B1- 7 219 212

## Description

### CROSS-REFERENCE TO RELATED APPLICATIONS

The present application claims priority from commonly owned U.S. Non-Provisional Patent Application No. 13/967,191 filed on August 14, 2013.

### FIELD

The present disclosure is generally related to vector arithmetic reduction.

### DESCRIPTION OF RELATED ART

Advances in technology have resulted in smaller and more powerful computing devices. For example, there currently exist a variety of portable personal computing devices, including wireless computing devices, such as portable wireless telephones, personal digital assistants (PDAs), tablet computers, and paging devices that are small, lightweight, and easily carried by users. Many such computing devices include other devices that are incorporated therein. For example, a wireless telephone can also include a digital still camera, a digital video camera, a digital recorder, and an audio file player. Also, such computing devices can process executable instructions, including software applications, such as a web browser application that can be used to access the Internet and multimedia applications that utilize a still or video camera and provide multimedia playback functionality.

Many such computing devices include vector processors for use in processing wireless transmissions and other activities associated with large quantities of repetitive calculations. Vector processors execute instructions that perform operations on multiple inputs that may be arranged as one-dimensional arrays or vectors. Execution of a vector instruction enables performance of a particular operation on the multiple inputs. For example, executing a conventional vector addition reduction instruction calculates a single sum value based on multiple inputs. Other operations, such as integral functions and cumulative density functions, may use the single sum in addition to one or more partial sums (e.g., one or more sums of less than all of the multiple inputs). In order to generate and output the one or more partial sums, multiple vector instructions are executed. Executing the multiple vector instructions conventionally increases memory usage and power consumption as compared to executing a single vector addition reduction instruction to generate and output a single sum.

US2006041610 (A1) discloses a processor comprising a plurality of arithmetic units, an accumulator unit, and a reduction unit coupled between the plurality of arithmetic units and the accumulator unit. The reduction unit receives products of vector elements from the arithmetic units and a first accumulator value from the accumulator unit, and processes the products and the first accumulator value to generate a second accumulator value for delivery to the accumulator unit. The processor implements a plurality of vector multiply and reduce operations having guaranteed sequential semantics, that is, operations which guarantee that the computational result will be the same as that which would be produced using a corresponding sequence of individual instructions.

US5845112 (A) discloses an extension to existent vector instruction sets presented in a form of new vector instructions which perform operations specialized for efficient digital video compression and decompression. A processor is designed to implement the arithmetic operation of each of these instructions in a single clock cycle, and some of the present instructions perform arithmetic operations selectively and directly on elements of the same registers.

### SUMMARY

A method of executing a cumulative vector arithmetic reduction instruction is disclosed. The cumulative vector arithmetic reduction instruction may be executed at a processor to enable multiple progressive arithmetic operations, such as progressive addition operations, to be performed on an input vector. The input vector may include a plurality of input elements stored in a sequential order. Executing the cumulative vector arithmetic reduction instruction may result in an output vector of multiple output elements. Each output element may be based on a result of applying the arithmetic operation to a corresponding input element of the input vector and any sequentially prior input elements of the input vector. Accordingly, the multiple output values may correspond to multiple partial sums of the plurality of input elements, as well as a sum of all of the plurality of input elements. At least one of the input elements or the output elements may be masked to prevent one or more input elements from being included in the cumulative vector arithmetic reduction operation or to prevent one or more output elements from storing a cumulative vector arithmetic reduction result.

A reduction tree may be selectively configured to execute a sectioned vector arithmetic reduction instruction based on a section grouping size of a sectioned vector arithmetic reduction instruction. The reduction tree may include a plurality of adders arranged into multiple rows. One or more adders of multiple rows may be selectively enabled based on the section grouping size, and multiple output values may be generated by the selectively enabled adders. The multiple output values may be concurrently generated by performing arithmetic (e.g., addition) operations on one or more groups of inputs. Each group may have the section grouping size as a result of the selectively enabled adders. Accordingly, a single reduction tree may be configured to execute multiple section vector arithmetic reduction instructions where each instruction has a different section grouping size.

In a particular embodiment, a method includes executing a vector instruction at a processor. The vector instruction includes a vector input that includes a plurality of elements. Executing the vector instruction includes providing a first element of the plurality of elements as a first output. Executing the vector instruction further includes performing a first arithmetic operation on the first element and a second element of the plurality of elements to provide a second output. Executing the vector instruction further includes storing the first output and the second output in an output vector.

In another particular embodiment, an apparatus includes a processor that includes a reduction tree. During execution of a vector instruction that identifies a vector input that includes a plurality of elements, the reduction tree is configured to provide a first element of the plurality of elements as a first output element. The reduction tree is further configured to perform a first arithmetic operation on the first element and a second element of the plurality of elements to provide a second output element. The reduction tree is further configured to store the first output element and the second output element in an output vector.

In another particular embodiment, an apparatus includes means for providing a first element of a plurality of elements as a first output. A vector instruction indicates a vector input that includes the plurality of elements. The apparatus further includes means for generating a second output based on the first element and a second element of the plurality of elements. The apparatus further includes means for storing the first output and the second output in an output vector.

In another particular embodiment, a non-transitory computer readable medium includes instructions that, when executed by the apparatus, cause the processor to provide a first element of a plurality of elements as a first output element, to perform an arithmetic operation on the first element and a second element of the plurality of elements to provide a second output, and to store the first output and the second output in an output vector. The plurality of elements is included in a vector input indicated by a vector instruction.

In another particular example, an apparatus includes a reduction tree that includes a plurality of inputs, a plurality of adders, and a plurality of outputs. A processor is configured to use the reduction tree during execution of a first instruction that includes a first section grouping size and execution of a second instruction that includes a second section grouping size. The reduction tree is configured to concurrently generate multiple output elements.

In another particular example, a method includes receiving, at a processor, a vector instruction that includes a section grouping size. The processor includes a reduction tree. The reduction tree includes a plurality of inputs, a plurality of arithmetic operation units, and a plurality of outputs. The method further includes determining the section grouping size. The method further includes executing the vector instruction using the reduction tree to concurrently generate the plurality of outputs based on the section grouping size. The reduction tree is selectively configurable for use with multiple different section grouping sizes.

In a further example, a method includes executing a vector instruction that includes a plurality of input elements. Executing the vector instruction includes grouping a first subset of the plurality of input elements to form a first set of input elements. Executing the vector instruction further includes grouping a second subset of the plurality of input elements to form a second set of input elements. Executing the vector instruction further includes performing a first arithmetic operation on the first set of input elements and performing a second arithmetic operation on the second set of input elements. Executing the vector instruction further includes rotating contents on an output register and, after rotating the contents of the output register, inserting first results of the first arithmetic operation and second results of the second arithmetic operation into the output register.

One particular advantage provided by at least one of the disclosed embodiments is a reduction tree that is configured to generate multiple partial results during execution of a single cumulative vector arithmetic reduction instruction. Executing the single cumulative vector arithmetic reduction instruction may use less space in memory and may decrease power consumption as compared to executing multiple vector instructions to generate a similar output. Another particular advantage provided by at least one of the disclosed embodiments is a processor that may be configured to use a single reduction tree during execution of a first instruction having a first section grouping size and during execution of a second instruction having a second grouping size. Using the single reduction tree may decrease chip area and power consumption of the processor as compared to using multiple reduction trees during execution of multiple instructions having different section grouping sizes.

Other aspects, advantages, and features of the present disclosure will become apparent after review of the entire application, including the following sections: Brief Description of the Drawings, Detailed Description, and the Claims.

### BRIEF DESCRIPTION OF THE DRAWINGS

FIG. 1 is a diagram of an illustrative process of executing a cumulative vector arithmetic reduction instruction;
FIG. 2 is a block diagram of an illustrative embodiment of a system to execute a vector instruction;
FIGS. 3-6 are block diagrams of illustrative embodiments of a reduction tree;
FIG. 7 is a block diagram of an illustrative embodiment of a portion of a reduction tree;
FIG. 8 is a block diagram of another illustrative embodiment of a reduction tree;
FIG. 9 is a diagram of an illustrative process of executing a sectioned vector arithmetic reduction instruction;
FIG. 10 is a diagram of an illustrative process of executing a rotate sectioned vector arithmetic reduction instruction;
FIG. 11A-B are diagrams of illustrative processes of executing a cumulative vector arithmetic reduction instruction that includes a mask;
FIG. 12 is a flow chart of an illustrative embodiment of a method of performing a first cumulative vector arithmetic reduction instruction;
FIG. 13 is a flow chart of an illustrative embodiment of a method of performing a vector instruction using a reduction tree;
FIG. 14 is a flow chart of an illustrative embodiment of a method of performing a rotate sectioned vector arithmetic reduction instruction; and
FIG. 15 is a block diagram of portable device that includes a reduction tree.

### DETAILED DESCRIPTION

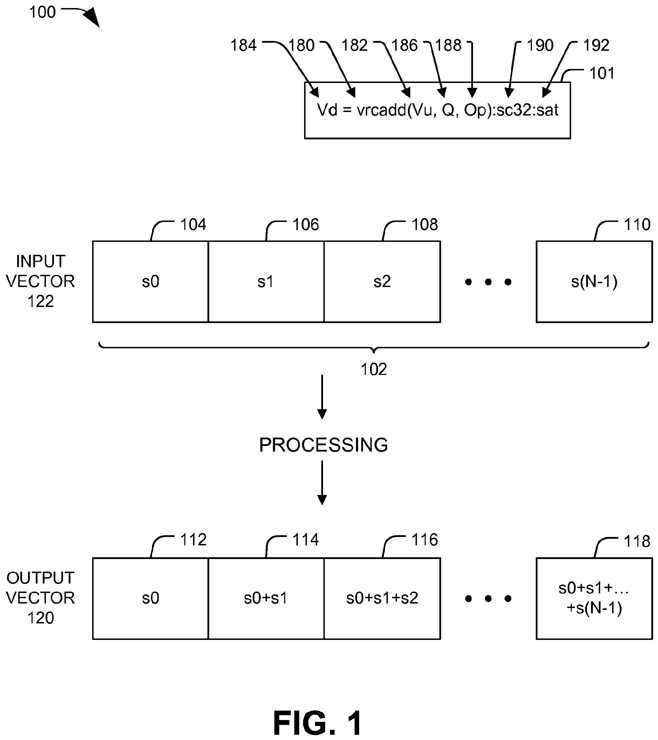

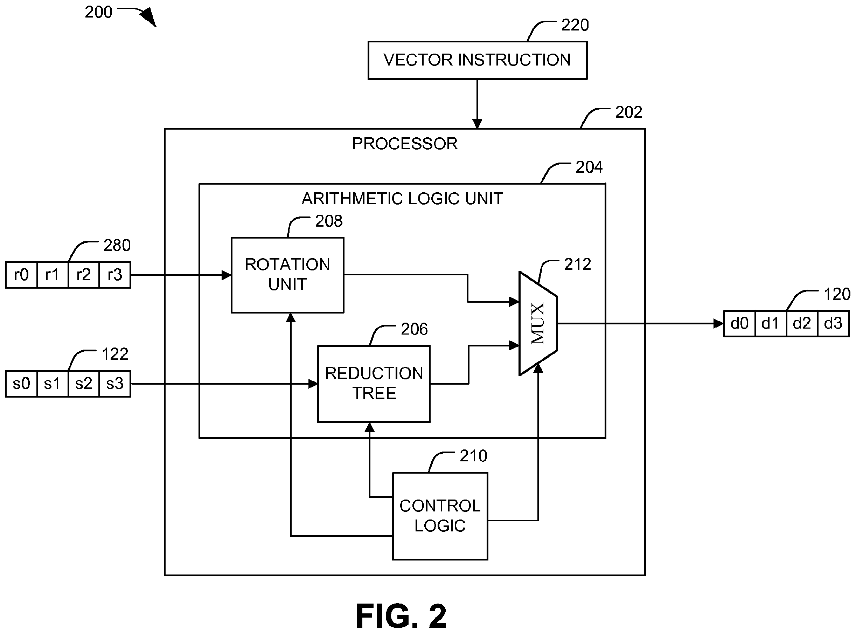

Referring to FIG. 1, a diagram of an illustrative process of executing a vector instruction is disclosed and generally designated 100. The vector instruction may include a cumulative vector arithmetic reduction instruction, such as an illustrative cumulative vector arithmetic reduction instruction 101. The cumulative vector arithmetic reduction instruction 101 may be executed at a processor, such as a pipelined vector processor, as described with reference to FIG. 2. The processor may receive an input vector 122 that includes a plurality of elements 102. The processor may process the input vector 122 and generate an output vector 120. The output vector 120 (e.g., multiple output elements stored in the output vector 120) may be based on the cumulative vector arithmetic reduction instruction 101. For example, executing the cumulative vector arithmetic reduction instruction 101 may generate a particular output by adding a particular element of the plurality of elements 102 to one or more other elements of the plurality of elements 102 (e.g., the addition may be cumulative) that are sequentially prior to the particular element in a sequential order of the input vector 122.

The plurality of elements 102 (e.g., the input vector 122) and the output vector 120 may include N elements, where N is an integer greater than one. The plurality of elements 102 may include a first element 104 (s0), a second element 106 (s1), a third element 108 (s2), and an Nth element 110 (s(N-1)). The plurality of elements 102 may be stored in a sequential order, such as "s0, s1, s2, ... s(N-1)" where s0 is a first sequential element and s(N-1) is a last sequential element in the sequential order. Although four elements are shown, a number of elements in the plurality of elements 102 (e.g., N) may be more or less than four. In a particular embodiment, a vector permutation instruction is executed using the input vector 122 prior to execution of the cumulative vector arithmetic reduction instruction 101 to arrange the plurality of elements 102 in the sequential order.

Executing the cumulative vector arithmetic reduction instruction 101 may generate multiple output elements (e.g., multiple output values) that are stored in the output vector 120. The output vector 120 may have a same number of elements as the input vector 122 (e.g., N). Executing the cumulative vector arithmetic reduction instruction 101 may include providing N output elements. The N output elements may be stored in the output vector 120. For example, a first output element 112, a second output element 114, a third output element 116, and an Nth output element 118 may be stored in the output vector 120. The output elements 112-118 may be concurrently stored in the output vector 120. For example, the first output element 112 and the second output element 114 may be stored in the output vector 120 during a single execution cycle of the processor that executes the cumulative vector arithmetic reduction instruction 101.

Each output element of the multiple output elements 112-118 (e.g., the N output elements) may be based on an arithmetic operation (e.g., an addition operation) performed on one or more elements of the plurality of elements 102. After execution of the cumulative vector arithmetic reduction instruction 101 using the plurality of elements 102 ordered in the particular sequential order "s0, s1, s2, ... s(N-1)", the first output element 112 may equal s0, the second output element 114 may equal s0+s1, the third output element 116 may equal s0+s1+s2, and the Nth output element 118 may equal a sum of each element of the plurality of elements 102 (s0+s1+...+s(N-1)). For example, execution of the cumulative vector arithmetic reduction instruction 101 may include providing (e.g., generating) the first element 104 as the first output element 112 and adding the first element 104 to the second element 106 to provide (e.g., generate) the second output element 114. The first output element 112 and the second output element 114 may be stored in different output elements of the output vector 120. Execution of the cumulative vector arithmetic reduction instruction 101 may further include adding the first element 104 and the second element 106 to the third element 108 to provide the third output element 116, and storing the third output element 116 in the output vector 120. Execution of the cumulative vector arithmetic reduction instruction 101 may further include adding each of the elements of the plurality of elements 102 to provide the Nth output element 118, and storing the Nth output element 118 in the output vector 120.

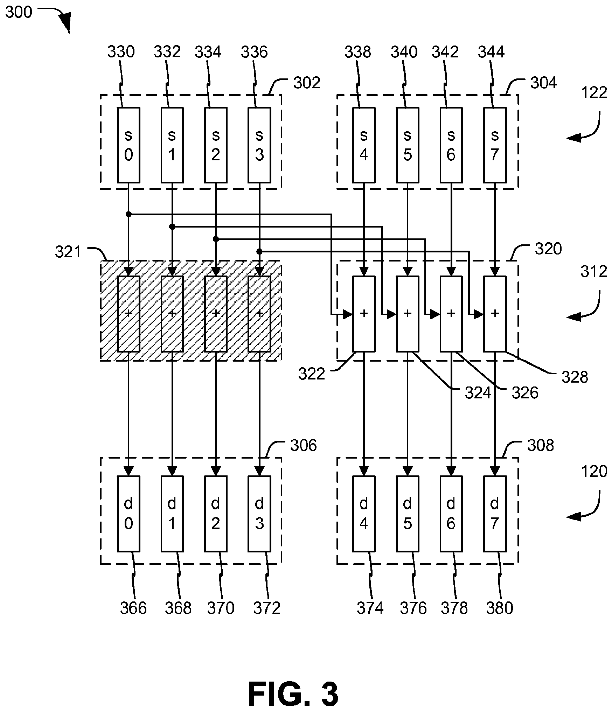

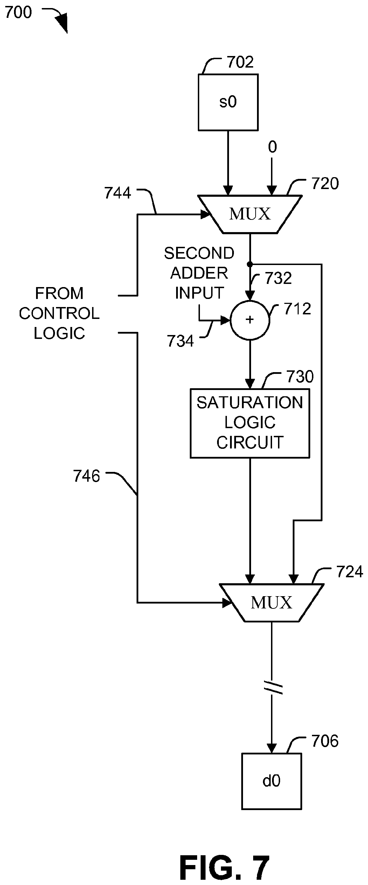

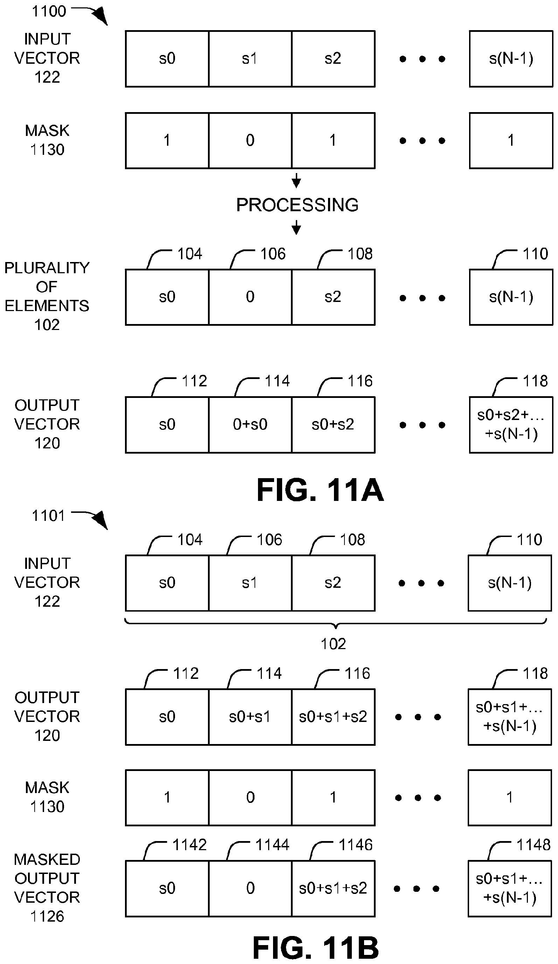

As illustrated in FIG. 1, the cumulative vector arithmetic reduction instruction 101 may include an instruction name 180 (vrcadd) (e.g., an opcode). The cumulative vector arithmetic reduction instruction 101 may also include one or more fields, such as a first field 182 (Vu), a second field 184 (Vd), a third field 186 (Q), a fourth field 188 (Op), a fifth field 190 (sc32), and a sixth field 192 (sat). A first value stored in the first field 182 may indicate the input vector 122 (e.g., vector Vu) and a second value stored in the second field 184 may indicate the output vector 120 (e.g., vector Vd) for use during execution of the cumulative vector arithmetic reduction instruction 101. A third value stored in the third field 186 may indicate a mask (e.g., mask Q), such as described in further detail with reference to FIGS. 11A-B, a fourth value stored in the fourth field 188 may indicate an operation vector (e.g., operation vector Op), a fifth value stored in the fifth field 190 may indicate an input value type, such as described in further detail with reference to FIGS. 3-4, and a sixth value stored in the sixth field 192 may indicate whether that saturation is to be performed during cumulative vector arithmetic reduction, as described with reference to FIG. 7.

Although addition operations have been described, the cumulative vector arithmetic reduction instruction 101 is not limited to performing only addition operations. For example, the cumulative vector arithmetic reduction instruction 101 may indicate one or more arithmetic operations to be performed on the plurality of elements 102. The one or more arithmetic operations may include addition operations, subtraction operations, or a combination thereof. For example, arithmetic reduction may be performed using one or more addition operations, using one or more subtraction operations, or using a combination of one or more addition operations and one or more subtraction operations. The one or more arithmetic operations may be indicated by a value in a particular field (e.g., a particular parameter), such as the fourth field 188. For example, the fourth field 188 may include a pointer to a location in memory storing an operation vector (e.g., a vector that indicates the one or more arithmetic operations) or to a register storing the operation vector. Each element of the operation vector may indicate a particular operation (e.g., an addition operation or a subtraction operation) to be performed on a corresponding element of the plurality of elements 102 during execution of the cumulative vector arithmetic reduction instruction 101. When at least one of the one or more arithmetic operations is a subtraction operation, one or more elements of the plurality of elements 102 may be complemented prior to generating the multiple output elements. For example, one or more elements of the plurality of elements 102 may be complemented based on the cumulative vector arithmetic reduction instruction 101 (e.g., based on the fourth value stored in the fourth field 188) prior to providing the first output element 112 and the second output element 114 (e.g., prior to generating the multiple output elements).

During operation, the processor may receive the cumulative vector arithmetic reduction instruction 101. The processor may execute the cumulative vector arithmetic reduction instruction using the plurality of elements 102 to generate and store the multiple output elements in the output vector 120. The multiple output elements may represent multiple partial results of a cumulative vector arithmetic reduction operation.

By generating multiple partial results (e.g., the multiple output elements 112-118) during execution of a single vector instruction, the cumulative vector arithmetic reduction instruction 101 may provide storage and power consumption benefits as compared to generating the multiple partial results during execution of multiple vector instructions. For example, generating the multiple partial results during execution of the single vector instruction may use less storage in a memory or a register set and may decrease power consumption of the processor as compared to generating the multiple partial results during execution of the multiple vector instructions.

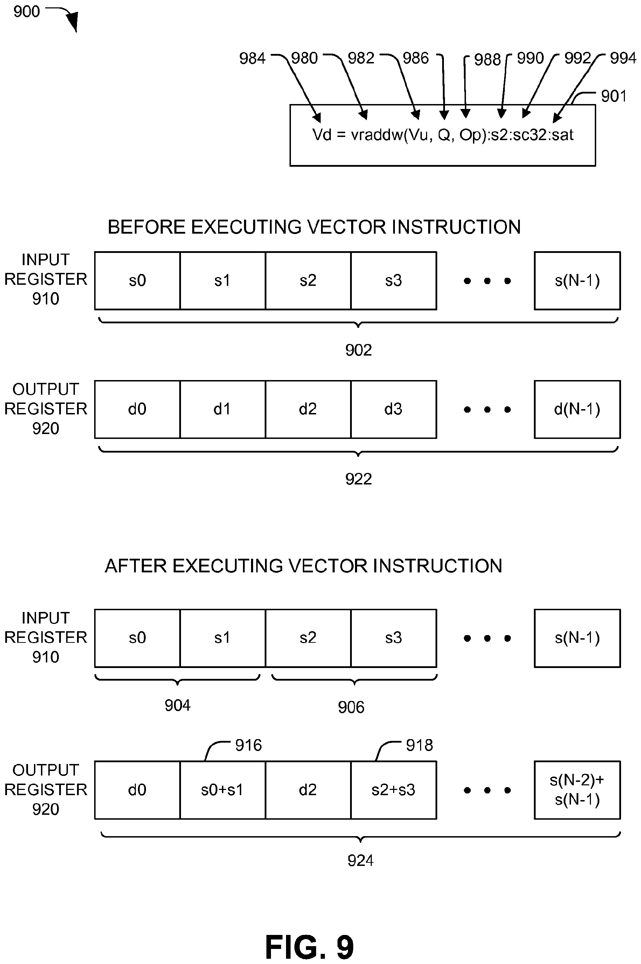

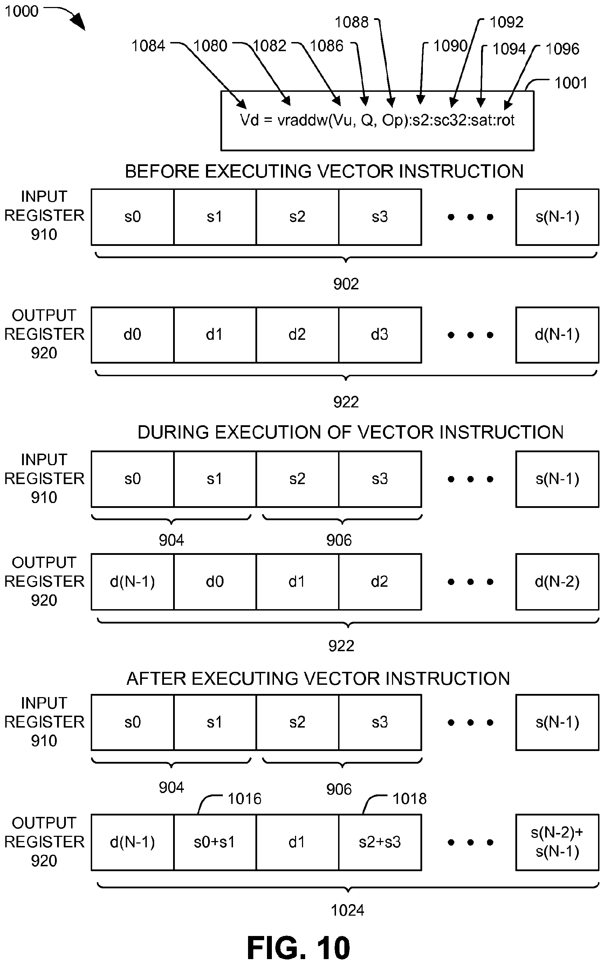

FIG. 2 is a block diagram of an embodiment of a system 200 configured to execute a vector instruction. The system 200 may include a processor 202 configured to receive a vector instruction 220 and the input vector 122, and to provide the output vector 120. The vector instruction 220 may be the cumulative vector arithmetic reduction instruction 101 of FIG. 1. Alternatively, the vector instruction 220 may be a sectioned vector arithmetic reduction instruction (such as described with reference to FIG. 9) or a rotate sectioned vector arithmetic reduction instruction (such as described with reference to FIG. 10), as illustrative, non-limiting examples.

The processor 202 may include an arithmetic logic unit (ALU) 204 and control logic 210. The ALU 204 may include a reduction tree 206 and a rotation unit 208. The ALU 204 may be configured to receive the input vector 122 and to perform one or more arithmetic operations on the input vector 122 using the reduction tree 206. The reduction tree 206 may provide the output vector 120. The output vector 120 may be provided to a location identified by the vector instruction 220, such as a register or a location in memory. For example, the output vector 120 may be provided to the location based on a particular field (e.g., the second field 184 of FIG. 1) of the vector instruction 220.

The ALU 204 and the reduction tree 206 may be part of an execution pipeline. For example, the processor 202 may be a pipelined vector processor including one or more pipelines. The reduction tree 206 may be included in the one or more pipelines. The reduction tree 206 may have a number of stages (e.g., a stage depth) based on a number of input elements (of the input vector 122). The number of stages of the reduction tree 206 may correspond to a base two logarithm of the number of input elements. For example, when the number of input elements is thirty-two, the reduction tree 206 may have five stages. The reduction tree 206 may include a plurality of arithmetic operation units arranged in one or more rows. Each stage of the reduction tree 206 may correspond to a row of arithmetic operation units of the reduction tree 206.

The control logic 210 may be configured to select (e.g., selectively enable) one or more adders of the plurality of adders of the reduction tree 206 based on the vector instruction 220 (e.g., the cumulative vector arithmetic reduction instruction 101 of FIG. 1), as described with reference to FIGS. 3-7. Selectively enabling the one or more arithmetic operation units may cause the reduction tree 206 to provide (e.g., to generate) one or more output elements for insertion into the output vector 120.

The rotation unit 208 may be configured to receive a rotation vector 280 and to selectively rotate the rotation vector 280 based on the vector instruction 220, as further described with reference to FIG. 10. The rotation unit 208 may be configured to rotate the rotation vector 280 prior to inserting (e.g., storing) the one or more output elements in the output vector 120. For example, the rotation unit 208 may rotate the rotation vector 280 in parallel with the reduction tree 206 generating the one or more output elements based on the input vector 122. The rotated rotation vector and the one or more output elements may be provided to a multiplexer 212 for insertion into the output vector 120 (e.g., generation of the output vector 120). For example, when the input vector 122 and the rotation vector 280 each include sixteen elements and execution of the vector instruction 220 generates eight output elements using the reduction tree 206, the multiplexer 212 may select the eight output elements and eight rotated elements from the rotated rotation vector for insertion into the output vector 120. Other selections may be chosen based on the input vector 122 and/or the rotation vector 280 having other sizes, or based on execution of the vector instruction 220 generating a different number of output elements. In an alternate embodiment, the rotation vector 280 may be the input vector 122, and a plurality of input elements from the input vector 122 may be provided to the rotation unit 208 and to the reduction tree 206.

The rotation unit 208 may be a rotator or a barrel vector shifter, as illustrative examples. The rotation vector 280 may include a plurality of prior elements (e.g., multiple elements generated as a result of execution of a prior vector instruction). The rotation vector 280 may be identified by the vector instruction 220. For example, the rotation vector 280 may be stored in a location, such as a register or a location in memory, identified by a field in the vector instruction 220. In a particular embodiment, a first location associated with the rotation vector 280 is the same as a second location associated with the output vector 120. For example, the vector instruction 220 may identify a particular register as the output vector 120, and previously stored elements (e.g., contents) of the particular register may be used as the rotation vector 280. The previously stored values at the particular register may be a result of a previous vector arithmetic reduction instruction. In another embodiment, the first location associated with the rotation vector 280 is the same as a third location associated with the input vector 122. In other embodiments, the rotation vector 280 may be identified by another value stored in another field of the vector instruction 220 (e.g., by a different value stored in a different field from the output vector 120) or may be predetermined based on an instruction name (e.g., an opcode) of the vector instruction 220.

During operation, the processor 202 may be configured to receive and execute the vector instruction 220 to perform vector arithmetic reduction (e.g., cumulative vector arithmetic reduction or sectioned vector arithmetic reduction) on the input vector 122 using the reduction tree 206. The reduction tree 206 may perform the vector arithmetic reduction on the input vector 122 to concurrently generate multiple results (e.g., during a single execution cycle of the processor 202). The multiple results generated by the reduction tree 206 may be stored in the output vector 120 during execution of the vector instruction 220.

By generating multiple partial results (e.g., the multiple results) during execution of a single vector instruction (e.g., the vector instruction 220), the system 200 may provide storage and power consumption improvements compared to other systems that generate the multiple partial results during execution of multiple vector instructions.

Referring to FIG. 3, a block diagram of a first illustrative embodiment of a reduction tree 300 is disclosed. For example, the reduction tree 300 may include the reduction tree 206 of FIG. 2. The reduction tree 300 may be used to execute a cumulative vector arithmetic instruction, such as the cumulative vector arithmetic instruction 101 of FIG. 1 or the vector instruction 220 of FIG. 2. The reduction tree 300 may be configured to receive a plurality of input elements stored in the input vector 122, including a first input element 302 and a second input element 304, and to provide (e.g., generate) a plurality of output elements to be stored in the output vector 120. The output vector 120 may include a first output element 306 and a second output element 308.

Each input element of the plurality of input elements and each output element of the plurality of output elements may include one or more sub-elements. For example, the first input element 302 may include a first plurality of input sub-elements 330-336 (s0-s3), such as a first input sub-element 330 (s0), a second input sub-element 332 (s1), a third input sub-element 334 (s2), and a fourth sub-element 336 (s3). The second input element 304 may include a second plurality of input sub-elements 338-344 (s4-s7), such as a fifth input sub-element 338 (s4), a sixth input sub-element 340 (s5), a seventh input sub-element 342 (s6), and an eighth input sub-element 344 (s7). Further, the first output element 306 may include a first plurality of output sub-elements 366-372 (d0-d3), such as a first output sub-element 366 (d0), a second output sub-element 368 (d1), a third output sub-element 370 (d2), and a fourth output sub-element 372 (d3). The second output element 308 may include a second plurality of output sub-elements 374-380 (d4-d7), such as a fifth output sub-element 374 (d4), a sixth output sub-element 376 (d5), a seventh output sub-element 378 (d6), and an eighth output sub-element 380 (d7). Each input element and output element may have the same size (e.g., the same number of bits). Additionally, each input sub-element may have the same size as each output sub-element (e.g., the same number of bits). For example, each input element (e.g., the first input element 302) and each output element may be sixty-four bits and may include four sixteen-bit sub-elements (e.g., input sub-elements 330-336). In an alternate embodiment, each of the input sub-elements 330-344 is an individual input element and each of the output sub-elements 366-380 is an individual output element, such that the input vector 122 includes a plurality of input elements 330-344 and the output vector 120 includes a plurality of output elements 366-380.

The reduction tree 300 may include a plurality of arithmetic operation units. In a particular embodiment, the plurality of arithmetic operation units may be a plurality of adders, including a first adder 320 and a second adder 321. In other embodiments, the plurality of arithmetic operation units may include subtractors or a combination of adders and subtractors. The plurality of adders may include (e.g., arranged in) one or more rows of adders. For example, the plurality of adders may include (e.g., arranged in) a first row 312. Although depicted as including a single row, the plurality of adders may include more than one row.

One or more adders of the plurality of adders may be selectively enabled, as described with reference to FIG. 7, based on a received cumulative vector arithmetic reduction instruction. Adders that are not selectively enabled (illustrated by hatching in FIG. 3, such as the second adder 321) may be configured to output a particular input received at the adder (e.g., to add a zero value to the particular input), as described with reference to FIG. 7. For example, the second adder 321 may be configured to receive the first input element 302 and to output the first input element 302 to be stored in the output vector 120. Adders that are selectively enabled (illustrated in FIG. 3 by adders that are not hatched, such as the first adder 320) may be configured to perform an addition operation. For example, the first adder 320 may perform an addition operation based on the first input element 302 and the second input element 304. The first adder 320 may generate an adder output equal to a sum of the first input element 302 and the second input element 304. The adder output may be provided as an output element (e.g., the second output element 308) to be stored in the output vector 120. Through selective enablement, the plurality of adders may generate (e.g., provide) the plurality of output elements stored in the output vector 120.

The plurality of input elements may have an input type indicated by the cumulative vector arithmetic reduction instruction (e.g., by a value stored in the fifth field 190 of the cumulative vector arithmetic reduction instruction 101 of FIG. 1). The input type may identify real numbers, imaginary numbers, or complex numbers (e.g., a combination of real numbers and imaginary numbers) and may additionally be associated with an element size. When the input type is real numbers, each sub-element of the plurality of elements may represent a real number value. When the input type is imaginary numbers, each sub-element of the elements may represent an imaginary number value. When the input type is complex numbers, for each element at least one sub-element may represent a real number value and at least one other sub-element may represent an imaginary number value. Thus, the reduction tree 300 may support multiple different input types, such as sixty-four bit real numbers, sixty-four bit imaginary numbers, thirty-two bit real numbers, thirty-two bit imaginary numbers, sixteen-bit real numbers, sixteen-bit imaginary numbers, thirty-two bit complex numbers, sixteen-bit complex numbers, one or more other input types, or any combination thereof.

For example, when the input type is sixteen-bit complex numbers, each input element 302 and 304 may be sixty-four bits, each input sub-element s0, s2, s4, and s6 may represent a sixteen-bit real number value, and each input sub-element s1, s3, s5, and s7 may represent a sixteen-bit imaginary number value. Each sixty-four bit input element may therefore be associated with two sixteen-bit complex input sub-elements (e.g., a first pair of s0 and s1, and a second pair of s2 and s3). As another example, when the input type identifies thirty-two bit complex numbers, each input element 302 and 304 may be sixty-four bits, a first pair of input sub-elements s0 and s1 and a second pair of input sub-elements s4 and s5 may represent thirty-two bit real number values, and a third pair of input sub-elements s2 and s3 and a fourth pair of input sub-elements s6 and s7 may represent thirty-two bit imaginary number values. Each sixty-four bit input element may therefore be associated with one thirty-two bit complex input sub-element (e.g., the first pair of input sub-elements s0 and s1 and the second pair of input sub-elements s2 and s3, or the third pair of input sub-elements s4 and s5 and the fourth pair of input sub-elements s6 and s7). In each example, the plurality of output elements may include similar types of output elements and output sub-elements as the input elements (e.g., the output elements may have a type identified by the input type).

Each adder of the plurality of adders may include multiple sub-adders. For example, the first adder 320 may include a first sub-adder 322, a second sub-adder 324, a third sub-adder 326, and a fourth sub-adder 328. In a particular embodiment, the first adder 320 is a sixty-four bit adder that is partitioned to perform four sixteen-bit addition operations (e.g., each sub-adder 322-328 represents a partition of the first adder 320). In an alternate embodiment, the each sub-adder 322-328 is a sixteen-bit adder, and the first adder 320 represents a group of four sixteen-bit adders. Each adder of the plurality of adders may have a similar configuration as the first adder 320 (e.g., the second adder 321 may include four sub-adders). Although sixty-four bit adders and sixteen-bit sub-adders are described, other sizes of adders and sub-adders may be used, such as based on sizes of the input elements of the input vector 122.

Each adder may be configured to perform multiple addition operations in an interleaved manner via multiple sub-adders. For example, the first adder 320 may be configured to add the first input sub-element 330 (s0) and the fifth input sub-element 338 (s4) using the first sub-adder 322, to add the second input sub-element 332 (s1) and the sixth input sub-element 340 (s5) using the second sub-adder 324, to add the third input sub-element 334 (s2) and the seventh input sub-element 342 (s6) using the third sub-adder 326, and to add the fourth input sub-element 336 (s3) and the eighth input sub-element 344 (s7) using the fourth sub-adder 328. Thus, the reduction tree 300 may be configured to perform a cumulative vector arithmetic reduction operation using the first input element 302 and the second input element 304 on a sub-element by sub-element basis in an interleaved manner. Performing interleaved addition on a sub-element by sub-element basis may enable the reduction tree to perform addition operations on sub-elements having different data types (e.g., real numbers, imaginary numbers, or complex numbers).

Multiple adder outputs of a bottom row (e.g., the first row 312) of the plurality of adders may be provided as output elements (e.g., the output elements 306 and 308) and stored in the output vector 120. For example, each output of each sub-adder of the second adder 321 may be provided as a corresponding output sub-element of the first output element 306 and each output of each sub-adder 322-328 of the first adder 320 may be provided as a corresponding output sub-element of the second output element 308. The multiple output elements 306 and 308 (e.g., the multiple output sub-elements 366-380) may represent multiple partial results of cumulative vector arithmetic reduction.

Executing a received cumulative vector arithmetic reduction instruction may generate multiple partial results of the cumulative vector arithmetic reduction instruction having the input type identified by the cumulative vector arithmetic reduction instruction. For example, when the cumulative vector arithmetic reduction instruction is associated with (e.g., indicates) a complex number operation and the input type is sixteen-bit complex numbers (e.g., input sub-elements s0, s2, s4, and s6 represent real number values and input sub-elements s1, s3, s5, and s7 represent imaginary number values), executing the cumulative vector arithmetic reduction instruction may include generating a first real number sub-element (e.g., the first output sub-element 366 (d0)) of the first output element 306 and a first imaginary number sub-element (e.g., the second output sub-element 368 (d1)) of the first output element 306. Executing the cumulative vector arithmetic reduction instruction may further include generating a second real number sub-element (e.g., the fifth output sub-element 374 (d4)) of the second output element 308 and a second imaginary number sub-element (e.g., the sixth output sub-element 376 (d5)) of the second output element 308. Thus, when the input type identifies that the input elements 302 and 304 are complex numbers, the output elements 306 and 308 may be complex numbers.

During operation, the reduction tree 300 may be used to execute a received cumulative vector arithmetic reduction instruction. During execution of the cumulative vector arithmetic reduction instruction, one or more adders of the plurality of adders may be selectively enabled based on the cumulative vector arithmetic reduction instruction to generate multiple output elements including the output elements 306 and 308 (e.g., including the multiple output sub-elements 366-380 (d0-d7)). For example, the first adder 320 may be selectively enabled entirely, or at least partially (e.g., one or more of the sub-adders 322-328 may be selectively enabled based on the cumulative vector arithmetic reduction instruction). One or more outputs of the plurality of adders may be provided as the output elements 306 and 308 (e.g., the multiple output sub-elements 366-380 (d0-d7)) for storage in the output vector 120 during execution of the cumulative vector arithmetic reduction instruction.

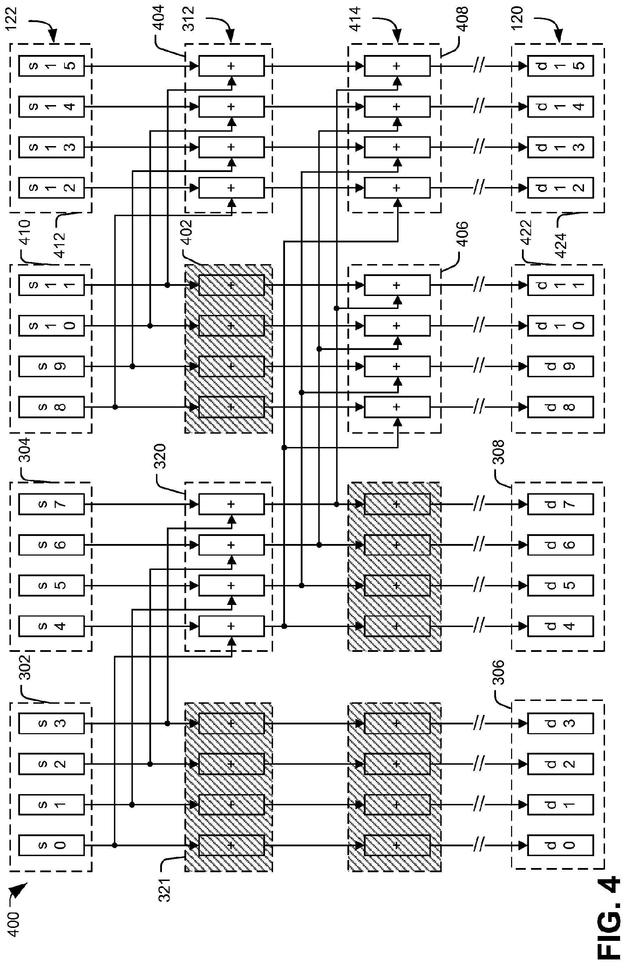

Referring to FIG. 4, a block diagram of a second illustrative embodiment of a reduction tree 400 is disclosed. The reduction tree 400 may be used during execution of a cumulative vector arithmetic reduction instruction, such as the cumulative vector arithmetic reduction instruction 101 of FIG. 1 or the vector instruction 220 of FIG. 2. The reduction tree 400 may include the reduction tree 206 of FIG. 2 or the reduction tree 300 of FIG. 3 as illustrative, non-limiting examples. To illustrate, the reduction tree 400 may illustrate an expansion of the reduction tree 300 of FIG. 3 to support an embodiment where the input vector 122 has four input elements. The reduction tree 400 may include a plurality of adders, including the first adder 320, the second adder 321, and adders 402-408, that are configured to be selectively enabled based on the cumulative vector arithmetic reduction instruction to generate the output vector 120. Although FIG. 4 illustrates a plurality of adders, the reduction tree 400 may include a plurality of other arithmetic operation units.

The input vector 122 may include the first input element 302, the second input element 304, a third input element 410, and a fourth input element 412. Each input element may include a plurality of input sub-elements. For example, the first input element 302 may include input sub-elements s0-s3, the second input element 304 may include input sub-elements s4-s7, the third input element 410 may include input sub-elements s8-s11, and the fourth input element 412 may include input sub-elements s12-s15. The output vector 120 may include four output elements. For example, the output vector 120 may include the first output element 306, the second output element 308, a third output element 422, and a fourth output element 424. Each output element may include a plurality of output sub-elements. For example, the first output element 306 may include output sub-elements d0-d3, the second output element 308 may include output sub-elements d4-d7, the third output element 422 may include output sub-elements d8-d11, and the fourth output element 424 may include output sub-elements d12-d15.

The plurality of adders may include (e.g., be arranged in) a plurality of rows, such as the first row 312 and second row 414. Although two rows are shown, in other embodiments the plurality of adders may include more rows or fewer rows, such as based on a number of input elements in the input vector 122. Although each row 312, 414 is illustrated as having four adders, in other embodiments each row may have more than or fewer than four adders, such as based on a number of input elements in the input vector 122. Each of the adders 402-408 may include four sub-adders, as described with reference to the adders 320 and 321 of FIG. 3.

One or more adders of the plurality of adders may be selectively enabled, as described with reference to FIG. 7, based on a received cumulative vector arithmetic reduction instruction. Adders that are not selectively enabled (illustrated by hatching in FIG. 4, such as the second adder 321 and a third adder 402) may be configured to output a particular input received at the adder (e.g., to add a zero value to the particular input), as described with respect to FIG. 7. For example, the second adder 321 may be configured to receive the first input element 302 and to output the first input element 302 to an adder in the second row 414. Adders that are selectively enabled (illustrated in FIG. 4 by adders that are not hatched, such as the first adder 320, a fourth adder 404, a fifth adder 406, and a sixth adder 408) may be configured to perform an addition operation. For example, the first adder 320 may perform an addition operation based on the first input element 302 and the second input element 304, and the fourth adder 404 may be configured to perform an addition operation based on the third input element 410 and the fourth input element 412. The fifth adder 406 may perform an addition operation based on a first adder output of the first adder 320 and a second adder output of the third adder 402 (e.g., a value of the third input element 410), and the sixth adder 408 may perform an addition operation based on the first adder output and a third adder output of the fourth adder 404.

Adder outputs for the second row 414 may be provided as multiple output elements (e.g., the output elements 306, 308, 422, and 424) to be stored in the output vector 120. Through selective enablement, the plurality of adders may generate (e.g., provide) the plurality of output elements stored in the output vector 120. The output elements 306, 308, 422, and 424 (e.g., the output sub-elements d0-d15) may represent one or more partial products of cumulative vector arithmetic reduction. For example, the first output element 306 may be the first input element 302, the second output element 308 may be a sum of the first input element 302 and the second input element 304, the third output element 422 may be a sum of the first input element 302, the second input element 304, and the third input element 410, and the fourth output element 424 may be a sum of the first input element 302, the second input element 304, the third input element 410, and the fourth input element 412. The output elements 306, 308, 422, and 424 may be generated by a sub-element by sub-element basis, where the addition operations are performed in an interleaved manner to generate the output sub-elements d0-d15, as explained with reference to FIG. 3. For example, output sub-element d8 may be equal to a sum of input sub-elements s0, s4, and s8, and output sub-element d12 may be equal to a sum of input sub-elements s0, s4, s8, and s12. Each output sub-element may be generated in a similar manner.

Although FIG. 4 illustrates a single reduction tree 400 (e.g., a reduction network), in other embodiments, the reduction tree 400 may be logically partitioned into a plurality of cumulative parallel reduction networks that operate in an interleaved manner. For example, in an alternate embodiment each cumulative reduction network may include a particular sub-adder of each adder (e.g., a first cumulative reduction network may include a corresponding first sub-adder of each adder). Each cumulative reduction network may operate in parallel with the other cumulative reduction networks, and results from each cumulative reduction network may be stored in the output vector 120. For example, the reduction tree 400 may be logically partitioned into four sixteen-bit cumulative reduction networks. In another example, the reduction tree 400 may be logically partitioned into two thirty-two bit cumulative reduction networks.

During operation, the reduction tree 400 may be used to execute a received cumulative vector arithmetic reduction instruction. During execution of the cumulative vector arithmetic reduction instruction, one or more adders of the plurality of adders may be selectively enabled based on the cumulative vector arithmetic reduction instruction to generate the multiple output elements 306, 308, 422, and 424. The multiple output elements 306, 308, 422, and 424 may be stored in the output vector 120 during execution of the cumulative vector arithmetic reduction instruction.

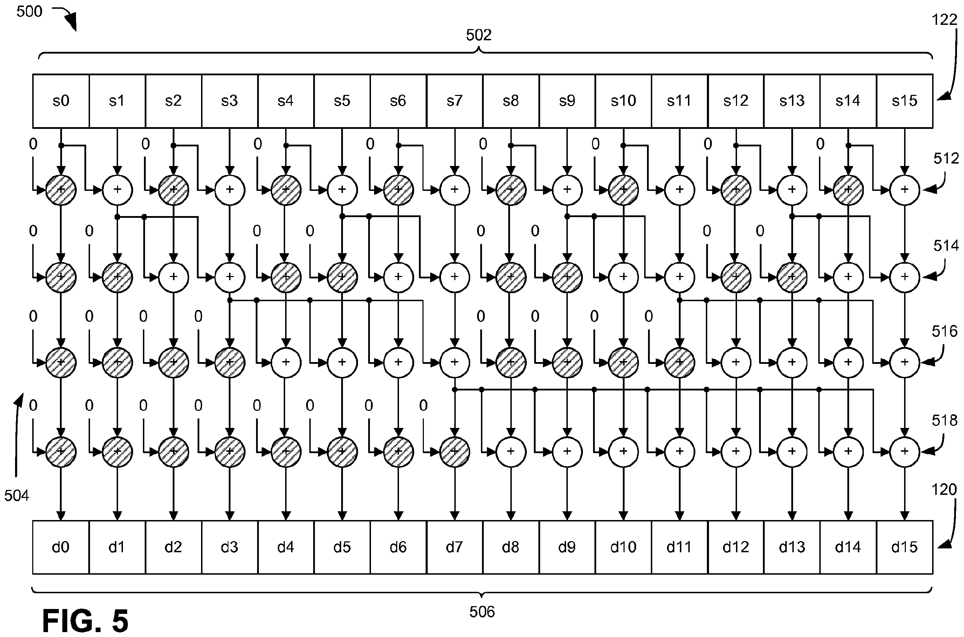

Referring to FIG. 5, a block diagram of a third illustrative embodiment of a reduction tree 500 is disclosed. The reduction tree 500 may be used during execution of a cumulative vector arithmetic instruction, such as the cumulative vector arithmetic reduction instruction 101 of FIG. 1 or the vector instruction 220 of FIG. 2. The reduction tree 500 may include the reduction tree 206 of FIG. 2, the reduction tree 300 of FIG. 3, or the reduction tree 400 of FIG. 4, as illustrative, non-limiting examples. The reduction tree 500 may be configured to receive a plurality of input elements 502 stored in the input vector 122 and to provide (e.g., generate) a plurality of output elements 506 to be stored in the output vector 120.

The reduction tree 500 may include the plurality of input elements 502, a plurality of adders 504, and a plurality of output elements 506. Although FIG. 5 illustrates a plurality of adders 504, the reduction tree 500 may include a plurality of other arithmetic operation units. The plurality of input elements 502 may include input elements s0-s15 of the input vector 122. The plurality of output elements 506 may include output elements d0-d15 of the output vector 120. The plurality of input elements 502 (s0-s15) may be ordered in a sequential order, such as "s0, s1, s2, ... s15" where s0 is a first sequential element and s15 is a last sequential element in the sequential order. The plurality of output elements 506 (d0-d15) may be arranged in a similar sequential order "d0, d1,d2,... d15."

Each input element of the plurality of input elements 502 may have the same size. For example, each input element of the plurality of input elements 502 may be sixty-four bits. Each output element of the plurality of output elements 506 may also have the same size. For example, each output element of the plurality of output elements 506 may be sixty-four bits. In a particular embodiment, each input element may have the same size as each output element (e.g., sixty-four bits). A number of input elements may be equal to a number of output elements. For example, input vector 122 may have sixteen input elements, and the output vector 120 may have sixteen output elements. The number and size of the elements are illustrative; the input elements and output elements may have other sizes and the vectors (e.g., the input vector 122 and the output vector 120) may have other sizes (e.g., other numbers of elements) than illustrated. Although not illustrated, each input element may include multiple input sub-elements (e.g., four input sub-elements), and each output element may include four output sub-elements, as described with reference to FIGS. 3-4. Each input element and each output element may be a real number, an imaginary number, or a complex number, based on a type indicated by the cumulative vector arithmetic reduction instruction, such as described with respect to FIGS. 3-4.

The plurality of adders 504 may be arranged in multiple rows of adders including a first row 512, a second row 514, a third row 516, and a fourth row 518. Although four rows of adders are illustrated, in other embodiments the reduction tree 500 may include (e.g., be arranged in) fewer than four rows or more than four rows, such as based on the number of input elements and output elements. Each adder of the plurality of adders 504 may have a same size. For example, each adder of the plurality of adders 504 may be a sixty-four bit adder. Although not shown, each adder of the plurality of adders 504 may include a plurality of sub-adders and may be configured to perform addition operations on a sub-element by sub-element basis in an interleaved manner, such as described with reference to FIGS. 3-4.

Each adder output may be provided to an adder in the same column on the next row and may also be routed to other adders as shown in FIG. 5 to enable the reduction tree 500 to generate the multiple output elements 506 (d0-d15). For example, an output of a first adder of the first row 512 (e.g., the adder of the first row 512 beneath input element s1) may be routed to a second adder of the second row 514 (e.g., the adder of the second row 514 beneath input element s2) and to a third adder of the second row 514 (e.g., the adder of the second row 514 beneath input element s3). An output of the third adder may be routed to a fourth adder of the third row 516, a fifth adder of the third row 516, a sixth adder of the third row 516, and a seventh adder of the third row 516 (e.g., the adders of the third row 516 beneath input elements s4-s7, respectively). Additionally, an output of the seventh adder may be routed to eight adders of the fourth row 518 (e.g., the adders of the fourth row 518 beneath input elements s8-s15).

One or more adders of the plurality of adders 504 may be selectively enabled based on the cumulative vector arithmetic reduction instruction. For example, the one or more adders may be selectively enabled (as illustrated by the non-hatched adders of FIG. 5) by control logic (not shown), such as the control logic 210 of FIG. 2. One or more adders that are not enabled (as shown by the hatched adders of FIG. 5) may be configured to output a received input (e.g., to add a zero value to the particular input), as described with reference to FIG. 7.

The reduction tree 500 may be configured to concurrently generate the multiple output elements d0-d15 based on the multiple input elements s0-s15 and the cumulative vector arithmetic reduction instruction. For example, the reduction tree 500 may be configured to provide a first input element s0 as a first output element d0, to add the first input element s0 to a second input element s1 to provide a second output element s1, and to store the first output element s0 and the second output element s1 in the output vector 120. The reduction tree 500 may be configured to add the first element s0 and the second element s1 to a third element s2 to provide a third output element d2. Additionally, the reduction tree 500 may be configured to generate an output element d15 by generating a sum of each input element s0-s15. Output elements d3-d14 may be generated as partial cumulative sums in a similar manner.

During operation, the reduction tree 500 may be used to execute a received cumulative vector arithmetic reduction instruction. During execution of the cumulative vector arithmetic reduction instruction, the reduction tree 500 may receive the plurality of input elements 502 from the input vector 122. During execution of the cumulative vector arithmetic reduction instruction, multiple adders of the plurality of adders 504 may be selectively enabled to provide (e.g., generate) the multiple output elements d0-d15, and the multiple output elements d0-d15 may be stored in the output vector 120.

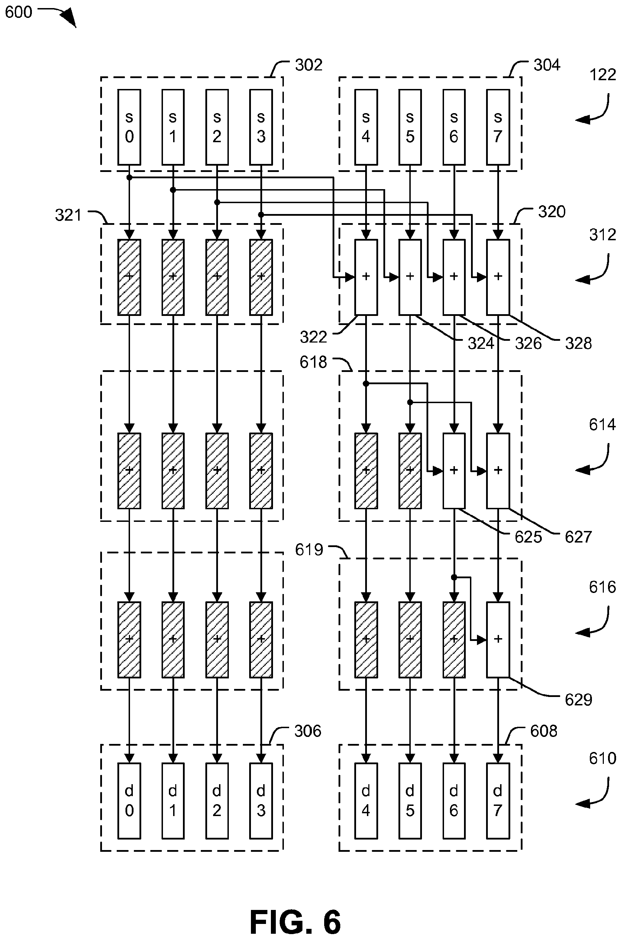

Referring to FIG. 6, a block diagram of a fourth illustrative embodiment of a reduction tree 600 is disclosed. The reduction tree 600 may be used during execution of a cumulative vector arithmetic reduction instruction, such as the cumulative vector arithmetic reduction instruction 101 of FIG. 1 or the vector instruction 220 of FIG. 2. The reduction tree 600 may include the reduction tree 206 of FIG. 2, the reduction tree 300 of FIG. 3, the reduction tree 400 of FIG. 4, the reduction tree 500 of FIG. 5, or a combination thereof. The reduction tree 600 may be configured to receive multiple input elements from an input vector 122 and to generate multiple output elements of an output vector 610 based on the cumulative vector arithmetic reduction instruction. Although FIG. 6 illustrates a plurality of adders, the reduction tree 600 may include a plurality of other arithmetic operation units.

The reduction tree 600 may receive the multiple input elements, including the first input element 302 and the second input element 304, from the input vector 122. The first input element 302 may include input sub-elements s0-s3 and the second input element 304 may include input sub-elements s4-s7. The input elements and input sub-elements may have sizes indicated by the cumulative vector arithmetic reduction instruction. For example, the input elements 302 and 304 may be sixty-four bits, and the input sub-elements s0-s7 may be sixteen bits. The output vector 610 may include the first output element 306 and a second output element 608. The first output element 306 may include output elements d0-d3 and the second output element 608 may include output elements d4-d7. The output elements and output sub-elements may have sizes indicated by the cumulative vector arithmetic reduction instruction. For example, the output elements 306 and 608 may be sixty-four bits, and the output sub-elements d0-d7 may be sixteen bits. Although described as including two elements, the input vector 122 and the output vector 610 may include any number of elements (e.g., any number of sub-elements), and may have other sizes than sixty-four bits.

The reduction tree 600 may include a plurality of adders, including the first adder 320, the second adder 321, a third adder 618, and a fourth adder 619, that are configured to be selectively enabled based on the cumulative vector arithmetic reduction instruction to generate an output vector 610. The plurality of adders may include (e.g., be arranged in) a plurality of rows, including the first row 312, a second row 614, and a third row 616. Each adder of the plurality of adders may include a plurality of sub-adders. For example, each adder of the plurality of adders may be a sixty-four bit adder and may include four sixteen-bit sub-adders. One or more adders of the plurality of adders may be selectively enabled based on the cumulative vector arithmetic reduction instruction. For example, the first adder 320 (e.g., sub-adders 322-328) may be selectively enabled as described with reference to FIG. 3.

The third adder 618 in the second row 614 may include a fifth sub-adder 625 configured to add an output of the first sub-adder 322 and an output of the third sub-adder 326. The third adder 618 may also include a sixth sub-adder 627 configured to add an output of the second sub-adder 324 and an output the fourth sub-adder 328. By adding sub-adder outputs, the third adder 618 may apply arithmetic reduction to generate two reduced outputs of the sub-adders 625 and 627 based on the outputs of the sub-adders 322, 324, 326, and 328. Similarly, the fourth adder 619 of the third row 616 may apply arithmetic reduction using a seventh sub-adder 629 to generate an additional reduced value based on the outputs of the sub-adders 625 and 627. Thus, the second output element 608 may include a sixteen-bit reduction value based on the plurality of input sub-elements s0-s7, as well as other partial values. For example, the output sub-element d4 may be equal to a sum of the input sub-element s0 and the input sub-element s4, the output sub-element d5 may be equal to a sum of the input sub-element s1 and the input sub-element s5, the output sub-element d6 may be equal to a sum of the input sub-elements s0, s2, s4, and s6, and the output sub-element d7 may be equal to a sum of the input sub-elements s0-s7.

During operation, the reduction tree 600 may be used to execute the cumulative vector arithmetic reduction instruction. During execution of the cumulative vector arithmetic reduction instruction, one or more adders of the plurality of adders may be selectively enabled based on the cumulative vector arithmetic reduction instruction to generate the multiple output elements 306 and 608 (e.g., the multiple output sub-elements d0-d7) for storage in the output vector 610.

Referring to FIG. 7, a block diagram of an illustrative embodiment of a portion of a reduction tree 700 is disclosed. The portion of the reduction tree 700 may be a portion of the reduction tree 206 of FIG. 2, the reduction tree 300 of FIG. 3, the reduction tree 400 of FIG. 4, the reduction tree 500 of FIG. 5, or the reduction tree 600 of FIG. 6. The portion of the reduction tree 700 may be used during execution of a vector instruction, such as the cumulative vector arithmetic reduction instruction 101 of FIG. 1, the vector instruction 220 of FIG. 2, the sectioned vector arithmetic reduction instruction 901 described with reference to FIG. 9, or the rotate sectioned vector arithmetic reduction instruction 1001 described with reference to FIG. 10. The portion of the reduction tree 700 may be configured to receive a first input element 702 (s0) from an input vector and to generate a first output element 706 (d0) for storage in an output vector based on the vector instruction.

The portion of the reduction tree 700 may include a first multiplexer 720 coupled to a first adder 712 and configured to receive the first input element 702 (s0) as a first mux input and a zero input (e.g., an input having a value equal to a logical zero) as a second mux input. Although the first adder 712 is illustrated, the portion of the reduction tree 700 may include a different arithmetic operation unit (e.g., a subtraction unit) in other embodiments. The first multiplexer 720 may be configured to receive a first control signal 744 from control logic, such as the control logic 210 of FIG. 2. The first multiplexer 720 may be configured to select between the first mux input and the second mux input based on the first control signal 744 to provide a mux output as a first adder input 732 of the first adder 712. For example, when the first control signal 744 is a particular value, the first multiplexer 720 may provide the first input element 702 to the first adder 712 as the first adder input 732. When the first control value 744 is a different value, the first multiplexer 720 may provide the zero input to the first adder 712 as the first adder input 732. Thus, the control logic (e.g., by setting the first control signal 744) may be configured to enable a subset of a plurality of adders to receive the zero input (e.g., a value equal to logical zero) based on the vector instruction.

The portion of the reduction tree 700 may include a first saturation logic circuit 730 coupled to the first adder 712 and configured to saturate an output of the first adder 712. Saturating the output of the first adder 712 may prevent the output of the first adder 712 from exceeding a maximum value or falling below a minimum value. The first saturation logic circuit 730 may be configured to output a saturated output (e.g., value) based on the output of the first adder 712. For example, the saturated output may have a value equal to the output of the first adder 712 when the output of the first adder 712 is between the minimum value and the maximum value. The saturated output may have a value of the maximum value when the output of the first adder 712 exceeds the maximum value, and the saturated output may have a value of the minimum value when the value of the output of the first adder 712 is less than the minimum value.

The portion of the reduction tree 700 may include a second multiplexer 724 coupled to the first saturation logic circuit 730. The second multiplexer 724 may be configured to receive the saturated output of the first saturation logic circuit 730 as a third mux input and the output of the first multiplexer 720 as a fourth mux input. The second multiplexer 724 may be configured to select between the third mux input and the fourth mux input based on a second control signal 746 to provide a mux output as the first output element 706 to be stored in the output vector. When the second control signal 746 is a particular value, the second multiplexer 724 may bypass the first adder 712 (e.g., provide the fourth mux input as the mux output). When the first adder 712 is not bypassed, the first adder 712 adds a first adder input 732 and a second adder input 734. The second adder input 734 may be a value received from an output of another adder, a zero value, or some other value. By selecting the fourth mux input, the second multiplexer 724 may bypass performing an addition operation using the first adder input 732 and the second adder input 734 and may provide the output of the first multiplexer 720 as the mux output. Thus, the control logic may be configured to bypass the first adder 712 based on the vector instruction. In an alternate embodiment, the first adder 712 may be bypassed by disabling a clock input (not shown).

Although only one input element is shown, the portion of the reduction tree 700 may operate on any number of input elements. For example, the portion of the reduction tree 700 may include additional circuitry (e.g., multiplexers, adders, saturation logic circuits, and connectors) to operate on input vectors having more than one input element. For example, the portion of the reduction tree 700 may include additional rows of adders, where each additional adder includes a corresponding first multiplexer, saturation logic circuit, and third multiplexer. The additional circuitry and adders may be controlled by additional control signals from the control logic. Thus, the portion of the reduction tree 700 may be included in each of the reduction trees 300-600 of FIGS. 3-6.

During execution of the vector instruction, the portion of the reduction tree 700 may be configured to receive the first input element 702 and generate the first output element 706 for storage in the output vector. The first multiplexer 720 may provide the zero input to the first adder 712 based on the first control signal 744. The first saturation logic circuit 730 may saturate the output of the first adder 712. The second multiplexer 724 may bypass the first adder 712 based on the second control signal 746.

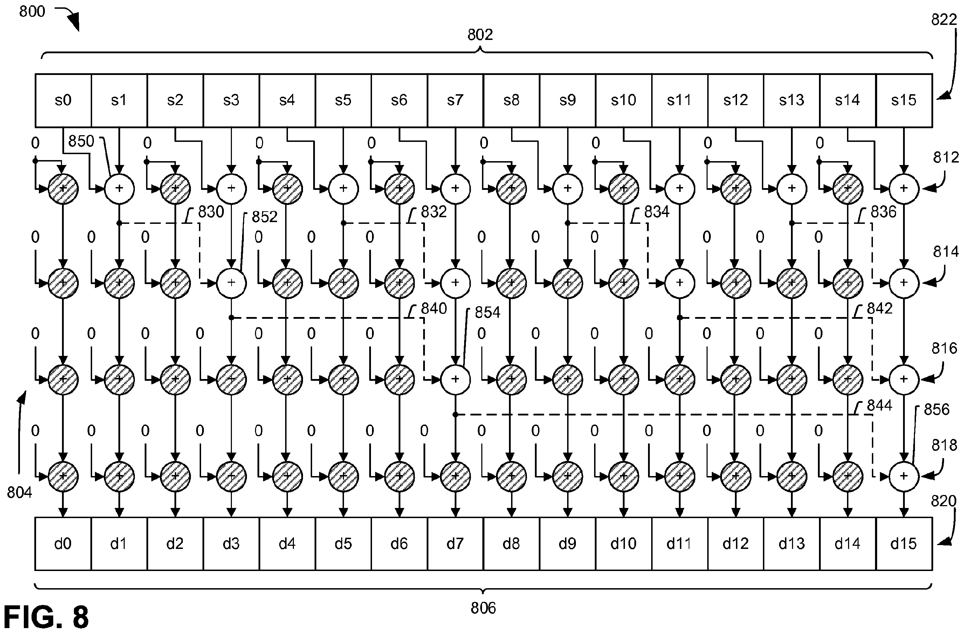

Referring to FIG. 8, a block diagram of a fifth illustrative embodiment of a reduction tree 800 is disclosed. The reduction tree 800 may include the reduction tree 206 of FIG. 2, one or more of the reduction trees 300-600 of FIGS. 3-6 (as further described herein), the portion of the reduction tree 700 of FIG. 7, or any combination thereof. The reduction tree 800 may be used during execution of a sectioned vector arithmetic reduction instruction, such as the sectioned vector arithmetic reduction instruction 901 described with reference to FIG. 9 or the rotate sectioned vector arithmetic reduction instruction 1001 described with reference to FIG. 10. The reduction tree 800 may be selectively configured to enable execution of the vector instruction based on a section grouping size included in the sectioned vector arithmetic reduction instruction. The section grouping size may be associated with a size of one or more groups of a plurality of input elements 802. For example, execution of the sectioned vector arithmetic reduction instruction may include grouping the plurality of input elements 802 into one or more groups having the section grouping size before performing one or more sectioned vector arithmetic reduction operations on the one or more groups. The reduction tree 800 may be configured to enable execution of a plurality of sectioned vector arithmetic reduction instructions, each having a different section grouping size. For example, the reduction tree 800 may be configured to enable execution of a first sectioned vector arithmetic reduction instruction having a section grouping size of two and a second sectioned vector arithmetic reduction instruction having a section grouping size of four. Although section grouping sizes of two and four are described, the reduction tree 800 may support other section grouping sizes.

The reduction tree 800 may include the plurality of input elements 802 (e.g., a plurality of input elements s0-s15), a plurality of adders 804, and a plurality of outputs (e.g., a plurality of adder outputs of a bottom row) configured to output multiple output elements 806 (d0-d15). Although FIG. 8 illustrates the plurality of adders 804, the reduction tree 800 may include a plurality of other arithmetic operation units in other embodiments. A processor, such as the processor 210 of FIG. 2, may be configured to use the reduction tree 800 during execution of the first sectioned vector arithmetic reduction instruction that includes a first section grouping size and during execution of the second sectioned vector arithmetic reduction instruction that includes a second section grouping size. The reduction tree 800 may be configured to concurrently generate the multiple output elements 806 (d0-d15). For example, the multiple output elements 806 (d0-d15) may be generated during a single processor execution cycle associated with execution of the first sectioned vector arithmetic reduction instruction.

The reduction tree 800 may be configured to receive the plurality of input elements 802 (s0-s15) from an input vector 822. The reduction tree 800 may be configured to generate the multiple output elements 806 (d0-d15) to be stored in an output vector 820. The plurality of input elements 802 (s0-s15) may be ordered in a sequential order, such as "s0, s1, s2, ... s15" where s0 is a first sequential element and s 15 is a last sequential element in the sequential order. The plurality of output elements 806 (d0-d15) may be ordered in a similar sequential order, such as "d0, d1, d2, ... d15" where d0 is a first sequential element and d15 is a last sequential element.

The reduction tree 800 may have a same number of input elements as output elements, and each input element may have a same size as each output element. For example, the input vector 822 may include sixteen sixty-four bit input elements, and the output vector 820 may include sixteen sixty-four bit output elements. Although not shown, each input element may include a plurality of sixteen-bit input sub-elements, and each output element may include a plurality of sixteen-bit output sub-elements, such as described with reference to FIGS. 3-4. The plurality of input elements and the plurality of output elements may represent real number values, imaginary number values, or a combination thereof. In a particular embodiment when an input type is complex numbers, each input element of the plurality of input elements may include a corresponding real number portion and a corresponding imaginary number portion. Each output element may be generated by performing a first arithmetic operation on one or more real number portions and performing a second arithmetic operation on one or more imaginary number portions in an interleaved manner, such as described with reference to FIGS. 3-4.

Although sixty-four bit elements and sixteen-bit sub-elements are described, each input element and each output element may have a size other than sixty-four bits, and each input sub-element and each output sub-element may have a size other than sixteen bits.

The plurality of adders 804 may be arranged in multiple rows of adders, as shown. The plurality of adders 804 may include (e.g., be arranged in) a first row 812, a second row 814, a third row 816, and a fourth row 818. Although four rows of adders are illustrated, the reduction tree 800 may alternately include (e.g., be arranged in) fewer than four rows or more than four rows, such as based on the number of input elements and the number of output elements. Each adder of the plurality of adders 804 may have a same size. For example, each adder of the plurality of adders 804 may be a sixty-four bit adder. Although not shown, each adder of the plurality of adders 804 may include a plurality of sub-adders and may be configured to perform addition operations on a sub-element by sub-element basis in an interleaved manner, such as described with reference to FIGS. 3-4.

One or more adder outputs from one or more rows of adders may be selectively routed via a plurality of paths 830-844, as shown by the dashed line paths in FIG. 8, to enable the reduction tree 800 to generate the multiple output elements 806 (d0-d15). For example, a first value generated by a first adder 850 may be provided to a second adder 852 via a first path 830, a second value generated by the second adder 852 may be provided to a third adder 854 via a second path 840, and a third value generated by the third adder 854 may be provided to a fourth adder 856 by a third path 844. Other values may be similarly provided between one or more adders via paths 832-836 and 842. Each path of the plurality of paths 830-844 may be selectively enabled based on the section grouping size of the sectioned vector arithmetic reduction instruction. For example, the first path 830 may be enabled by selecting the first value generated by the first adder 850 as an adder input to the second adder 852, and the first path 830 may be disabled by selecting a zero input as the adder input of the second adder 852, based on the sectioned arithmetic reduction instruction (e.g., based on the section grouping size). One or more adders of the plurality of adders 804 may have a corresponding multiplexer (not shown) configured to select an adder input, such as the first multiplexor 720 described with reference to FIG. 7, that selects the adder input from the zero input and the value provided by the corresponding path. The corresponding multiplexer may enable the corresponding path (e.g., select the input provided by the corresponding path) or disable the corresponding path (e.g., select the zero input) based on a control signal, as described with reference to FIG. 7.

The processor may include control logic, such as the control logic 210 of FIG. 2, that is configured to selectively configure the reduction tree 800 based on the section grouping size of the sectioned vector arithmetic reduction instruction. Selectively configuring the reduction tree 800 may include selectively enabling one or more adders (illustrated by one or more non-hatched adders in FIG. 8) and selecting corresponding adder inputs based on the section grouping size. For example, the control logic may be configured to selectively enable a first subset of the plurality of adders 804 and select a corresponding first subset of adder inputs (e.g., the reduction tree 800 may be configured in a first configuration) based on the first section grouping size during execution of the first sectioned vector arithmetic reduction instruction and selectively enable a second subset of the plurality of adders 804 and select a corresponding second subset of adder inputs (e.g., the reduction tree 800 may be configured in a second configuration) based on the second section grouping size during execution of the second sectioned vector arithmetic reduction instruction. A particular configuration of the reduction tree 800 may be associated with enabling a particular subset of adders and selecting a particular subset of adder inputs. The control logic may selectively enable a particular subset of the plurality of adders 804 and select a corresponding subset of adder inputs (e.g., selectively enable a particular subset of the plurality of paths 830-844) using one or more control signals, as described with reference to FIG. 7. For example, when the section grouping size is two, each of the plurality of paths 830-844 may be disabled (e.g., the zero value may be selected for each adder input associated with each of the plurality of paths 830-844) and only the non-hatched adders in the first row 812 may be enabled. When the section grouping size is four, only a first subset of paths (830-836) and the non-hatched adders in rows 812-814 may be enabled. When the section grouping size is eight, only a second subset of paths (830-842) and the non-hatched adders in rows 812-816 may be enabled. When the section grouping size is sixteen, all of the plurality of paths 830-844 and all of the non-hatched adders of rows 812-818 may be enabled. Thus, the control logic may be configured to selectively enable a subset of adders and a subset of paths (e.g., select a subset of corresponding adder inputs) based on the section grouping size.

By selectively enabling one or more adders of the plurality of adders 804 and selecting one or more corresponding adder inputs, the reduction tree 800 may be configured to concurrently generate the multiple output elements 806 (d0-d15) based on the plurality of input elements 802 (s0-s15) and the section grouping size included in the sectioned vector arithmetic reduction instruction (e.g., the first sectioned vector arithmetic reduction instruction or the second sectioned vector arithmetic reduction instruction). For example, when the section grouping size is two, the reduction tree 800 may generate (e.g., provide) a first output element d1 equal to s0+s1, a second output element d3 equal to s2+s3, a third output element d5 equal to s4+s5, a fourth output element d7 equal to s6+s7, a fifth output element d9 equal to s8+s9, a sixth output element d11 equal to s10+s11, a seventh output element d13 equal to s12+s13, and an eighth output element d15 equal to s14+s15. When the section grouping size is four, the reduction tree 800 may generate the second output element d3 equal to s0+s1+s2+s3, the fourth output element d7 equal to s4+s5+s6+s7, the sixth output element d11 equal to s8+s9+s10+s11, and the eighth output element d15 equal to s12-s13+s14+s15. When the section grouping size is eight, the reduction tree 800 may generate the fourth output element d7 equal to s0+s1+s2+s3+s4+s5+s6+s7 and the eighth output element d15 equal to s8+s9+s10+s11+s12-s13+s14+s15. When the section grouping size is sixteen, the reduction tree 800 may generate the eighth output element d15 equal to a sum of each input element s0-s15. Thus, the reduction tree 800 may be configured to selectively enable one or more adders of the multiple rows 812-818 and select one or more corresponding adder inputs based on the section grouping size to concurrently generate the multiple output elements 806.

During operation, the reduction tree 800 may be used to execute the sectioned vector arithmetic reduction instruction. During execution of the sectioned vector arithmetic reduction instruction, the reduction tree 800 may receive the plurality of input element 802 (s0-s15) from the input vector 822. For example, the plurality of input elements 802 (s0-s15) may be grouped into one or more first groups having a first section grouping size during execution of a first sectioned vector arithmetic reduction instruction and into one or more second groups having a second grouping size during execution of a second sectioned vector arithmetic reduction instruction. During execution of the sectioned vector arithmetic reduction instruction, one or more adders of the plurality of adders 804 may be selectively enabled to generate the multiple output elements 806 (d0-d15) using the plurality of outputs (e.g., the plurality of adder outputs of the fourth row 818), and the multiple output elements 806 (d0-15) may be stored in the output vector 820.

The reduction tree 800 enables execution of the first sectioned vector arithmetic reduction instruction having the first section grouping size and the second sectioned vector arithmetic reduction instruction having the second section grouping size using a single reduction tree. Using the single reduction tree may enable reduced device size and power consumption as compared to a processor that includes multiple reduction trees for use during execution of multiple instructions having different section grouping sizes.

Referring to FIG. 9, a diagram of a particular illustrative process of executing a vector instruction is disclosed and generally designated 900. The vector instruction may include a sectioned vector arithmetic reduction instruction, such as an illustrative sectioned vector arithmetic reduction instruction 901. The sectioned vector arithmetic reduction instruction 901 may be executed at a processor, such as the processor 202 of FIG. 2, that includes a reduction tree, such as the reduction tree 206 of FIG. 2, one or more of the reduction trees 300-600 of FIGS. 3-6, the portion of the reduction tree 700 of FIG. 7, the reduction tree 800 of FIG. 8, or any combination thereof. The processor may receive an input vector that includes a plurality of input elements 902 stored in an input register 910. The processor may process the plurality of input elements 902 and concurrently generate multiple output elements 924 (e.g., contents) of an output register 920.

The multiple output elements 924 may be based on the sectioned vector arithmetic reduction instruction 901. For example, executing the sectioned vector arithmetic reduction instruction 901 may generate a particular output element by adding a particular input element of the plurality of input elements 902 to one or more other input elements of the plurality of input elements 902 based on a section grouping size of the sectioned vector arithmetic reduction instruction 901.

The input register 910 may include the plurality of input elements 902. For example, the plurality of input elements 902 (e.g., the input vector) may include N elements, where N is an integer greater than one. The plurality of input elements 902 may include input elements s0-s(N-1). The plurality of input elements 902 may be stored in a sequential order, such as "s0, s1, s2, ... s(N-1)" where s0 is a first sequential input element and s(N-1) is a last sequential input element. Although five input elements are shown, a number of the plurality of input elements 902 (e.g., N) may include more than five elements or fewer than five elements.

Before execution of the sectioned vector arithmetic reduction instruction 901, the output register 920 may include multiple prior elements 922. The multiple prior elements 922 may include prior elements d0-d(N-1). The multiple prior elements 922 may be included in another vector, such as the rotation vector 280 of FIG. 2, or in a different vector. The multiple prior elements 922 may be stored in a location identified by the sectioned vector arithmetic reduction instruction 901, such as another register or a location in memory. The multiple prior elements may be included in the sectioned vector arithmetic reduction instruction 901 or may be indicated by a value stored in a field or a parameter of the sectioned vector arithmetic reduction instruction 901, such as by a pointer. The multiple prior elements 922 may be stored in a sequential order prior to execution of the sectioned vector arithmetic reduction instruction. For example, the multiple prior elements 922 may be stored in a particular sequential order "d0, d1, d2, d3 ... d(N-1)" (e.g., d0 is a first sequential prior element and d(N-1) is a last sequential prior element).

The process 900 illustrates execution of the sectioned vector arithmetic reduction instruction 901 having an illustrative section grouping size of two. Executing the sectioned vector arithmetic reduction instruction may include grouping the plurality of input elements 902 into multiple groups, such as a first set of input elements 904 and a second set of input elements 906. A first arithmetic (e.g., addition) operation may be performed on the first set of input elements 904 to generate a first result equal to s0+s1, and a second arithmetic (e.g., addition) operation may be performed on the second set of input elements 906 to generate a second result equal to s2+s3. The first result (s0+s1) may be inserted into a first output element 916 of the output register 920 and the second result (s2+s3) may be inserted into a second output element 918 of the output register 920. When a number of results generated is less than the number of output elements in the output register 920, one or more prior elements of the plurality of prior elements 922 may remain (e.g., may not be overwritten) in the output register 920. For example, when the first output element 916 and the second output element 918 are inserted into the output register 920, the plurality of output elements may include prior elements d0 and d2 in the plurality of output elements 924. The plurality of input elements 902 may be grouped into different sets of input elements and different results may be generated when the section grouping size of the sectioned vector arithmetic reduction instruction 901 is a different size.

As illustrated in FIG. 9, the sectioned vector arithmetic reduction instruction 901 may include an instruction name 980 (e.g., an opcode), depicted as the name vraddw. The sectioned vector arithmetic reduction instruction 901 may also include a first field 982 (Vu), a second field 984 (Vd), a third field 986 (Q), a fourth field 988 (Op), a fifth field 990 (s2), a sixth field 992 (sc32), and a seventh field 994 (sat). A first value stored in the first field 982 may indicate an input vector as stored in the input register 910. In an alternate embodiment, first value stored in the first field 982 may indicate a pair of input vectors (e.g., the vector Vu and an additional vector Vv) where a first vector (e.g., Vu) of the pair of vectors is associated with real numbers and a second vector (e.g., Vv) of the pair of vectors is associated with imaginary numbers. A second value in the second field 984 may indicate an output vector stored as in the output register 920 for use during execution of the sectioned vector arithmetic reduction instruction 901. A third value stored in the third field 986 may indicate a mask (e.g., mask Q), such as described with reference to FIGS. 11A-B, a fourth value stored in the fourth field 988 may indicate an operation vector (e.g., operation vector Op), a fifth value stored in the fifth field 990 may indicate a section grouping size (e.g., "s2" may indicate a section grouping size of two), a sixth value stored in the sixth field 992 may indicate a type of input value (e.g., "sc32" may indicate a thirty-two bit complex number input type), and a seventh value stored in the seventh field 994 may indicate whether saturation is to occur during execution of the sectioned vector arithmetic reduction instruction. Although seven fields are described, the sectioned vector arithmetic reduction instruction may include more fields or fewer fields.

Although addition operations have been described, the sectioned vector arithmetic reduction instruction 901 is not limited to performing only addition operations. For example, the sectioned vector arithmetic reduction instruction 901 may indicate one or more arithmetic operations to be performed on the plurality of input elements 902. The one or more arithmetic operations may include addition operations and subtraction operations. The one or more arithmetic operations may be indicated by a value in a particular field (e.g., a particular parameter), such as the fourth field 988. For example, the fourth field 988 may include a pointer to a location in memory storing an operation vector (e.g., a vector that indicates the one or more arithmetic operations) or to a register storing the operation vector. Each element of the operation vector may indicate a particular operation (e.g., an addition operation or a subtraction operation) to be performed on a corresponding element of the plurality of input elements 902 during execution of the sectioned vector arithmetic reduction instruction 901. For example, executing the sectioned vector arithmetic reduction instruction may include grouping the plurality of input elements 902 into one or more input groups based on the section grouping size and performing one or more arithmetic operations on the one or more input groups to generate the multiple output elements 924. When at least one of the one or more arithmetic operations is a subtraction operation, one or more elements of the plurality of input elements 902 may be complemented prior to generating the multiple output elements 924.

During operation, the processor may receive the sectioned vector arithmetic reduction instruction 901. The processor may execute the sectioned vector arithmetic reduction instruction 901 using the plurality of input elements 902 to generate and store the multiple output elements 924 in the output register 920. The multiple output elements 924 may represent results based on the plurality of input elements 902 being grouped into one or more groups of input elements based on the section grouping size of the sectioned vector arithmetic reduction instruction 901.

By generating the multiple output elements 924 based on the section grouping size of the sectioned vector arithmetic reduction instruction 901, the sectioned vector arithmetic reduction instruction 901 enables execution of multiple sectioned vector arithmetic reduction instructions having different section grouping sizes using a single reduction tree. Using the single reduction tree may enable reduced device size and power consumption as compared to a processor that includes multiple reduction trees for use during execution of multiple instructions having different section grouping sizes.

Referring to FIG. 10, a diagram of a particular illustrative process of executing a rotate sectioned vector arithmetic reduction instruction is disclosed and generally designated 1000. The rotate sectioned vector arithmetic reduction instruction may be a single vector instruction and may include the illustrative rotate sectioned vector arithmetic reduction instruction 1001. The rotate sectioned vector arithmetic reduction instruction 1001 may be executed at a processor, such as the processor 202 of FIG. 2, that includes a reduction tree, such as the reduction tree 206 of FIG. 2, one or more of the reduction trees 300-600 of FIGS. 3-6, the portion of the reduction tree 700 of FIG. 7, the reduction tree 800 of FIG. 8, or any combination thereof. The processor may receive an input vector that includes the plurality of input elements 902 stored in the input register 910. The processor may process the plurality of input elements 902 and concurrently generate multiple output elements 1024 (e.g., contents) of the output register 920.

The rotate sectioned vector arithmetic reduction instruction 1001 may include an instruction name 1080 (e.g., an opcode), depicted as the name vraddw. The rotate sectioned vector arithmetic reduction instruction 1001 may also include a first field 1082 (Vu), a second field 1084 (Vd), a third field 1086 (Q), a fourth field 1088 (Op), a fifth field 1090 (s2), a sixth field 1092 (sc32), a seventh field 1094 (sat), and an eighth field 1096 (rot). Although eight fields are illustrated, the rotate sectioned vector arithmetic reduction instruction 1001 may include more fields or fewer fields. The fields 1082-1094 may correspond to the fields of the sectioned vector arithmetic reduction instruction 901 of FIG. 9. A value stored in the eighth field 1096 may indicate whether rotation is to occur. For example, the value stored in the eighth field 1096 may indicate a direction and a size of the rotation to occur. The rotation may have a rotation amount equal to the size of one input element, for example sixty-four bits, and may be to the left. In other embodiments, the value stored in the eighth field 1096 may indicate other sizes and directions of rotation. As another example, the value stored in the eighth field 1096 may indicate that rotation does not occur (e.g., the rotate sectioned vector arithmetic reduction instruction 1001 may operate similarly to the sectioned vector arithmetic reduction instruction 901 of FIG. 9). In a particular embodiment, a value stored in a ninth field (not shown) may indicate whether the plurality of prior elements 922 (e.g. contents) in the output register 920 is to be overwritten (e.g., set equal to zero) prior to storing the results of the arithmetic operations in the output register 920. In an alternate embodiment, the value stored in a different field (e.g., the eighth field 1096) may indicate whether the plurality of prior elements 922 in the output register 920 is to be overwritten.

Execution of the rotate sectioned vector arithmetic reduction instruction 1001 may proceed according to the execution of the sectioned vector arithmetic reduction instruction 901 with the addition of a rotation step. For example, execution of the rotate sectioned vector arithmetic reduction instruction 1001 may include determining whether to rotate the plurality of prior elements 922 in the output register 920 prior to generating the results of the arithmetic operations. Responsive to a first determination that the plurality of prior elements 922 is to be rotated (e.g., based on the value stored in the eighth field 1096), the plurality of prior elements 922 (e.g., contents) in the output register 920 may be rotated by a rotation amount indicated by the eighth field 1096. For example, when the rotation amount is sixty-four bits and the direction is to the right, the plurality of prior elements 922 may be rotated by one prior element to the right. Thus, during execution of the rotate sectioned vector arithmetic reduction instruction 1001 (e.g., prior to generating and storing the results in the output register 910), a first sequential element of the output register 910 may store d(N-1), a second sequential element of the output register 910 may store d(0), a third sequential element of the output register 910 may store d(1), and a last sequential element of the output register 920 may store d(N-2). As another example, when the direction is to the left, the plurality of prior elements 922 may be rotated to the left by the rotation amount. Responsive to a second determination that the plurality of prior elements 922 is not to be rotated (e.g., based on the value stored in the eighth field 1096), the plurality of prior elements 922 may be maintained in a prior sequential order (e.g., d(0) ... d(N-1)). For example, the plurality of prior elements 922 may not be rotated when the value stored in the eighth field 1096 is a zero value or a null value (e.g., when the eighth field 1096 is not included in the rotate sectioned vector arithmetic reduction instruction 1001). Thus, the plurality of prior elements 922 may be selectively (e.g., optionally) rotated based on the rotate sectioned vector arithmetic reduction instruction 1001.

Executing the rotate sectioned vector arithmetic reduction instruction 1001 may also include determining whether to overwrite the plurality of prior elements 922. For example, each element of the plurality of prior elements 922 that is not replaced by the results of the arithmetic operations may be set to a zero value (e.g., overwritten) based on the rotate sectioned vector arithmetic reduction instruction 1001 (e.g., based on the value stored in the ninth field). A particular prior element may be set to the zero value by a corresponding adder in the reduction tree receiving the zero value for both inputs, as illustrated by the adder beneath input element s0 in the first row of adders 812 of FIG. 8. In other embodiments, the plurality of prior elements 922 may be set to (e.g., overwritten with) a different value.

After the plurality of prior elements 922 in the output register 920 have been rotated, the arithmetic operation results may be generated based on the plurality of input elements 902 and inserted into the output register 920. Execution of the rotate sectioned vector arithmetic reduction instruction 1001 may include grouping the plurality of input elements 902 into multiple groups, such as the first set of input elements 904 and the second set of input elements 906. A first arithmetic (e.g., addition) operation may be performed on the first set of input elements 904 to generate a first result s0+s1, and a second arithmetic (e.g., addition) operation may be performed on the second set of input elements 906 to generate a second result s2+s3. The first result (s0+s1) may be inserted into a first output element 1016 of the output register 920 and the second result (s2+s3) may be inserted into a second output element 1018 of the output register 920. The first output element 1016 and the second output element 1018 may be different output elements of the output register 920.

A first number of input elements of the first set of input elements 904 and a second number of input elements of the second set of input elements 906 may be based on a section grouping size identified by the rotate sectioned vector arithmetic reduction instruction 1001. For example, the first number of elements and the second number of elements may be the same. When a number of results generated is less than the number of output elements in the output register 920, one or more rotated prior elements of the plurality of prior elements 922 (or one or more zero values when the plurality of prior elements 922 are overwritten prior to generating the results) may remain (e.g., may not be overwritten) in the output register 920. For example, when the first output element 1016 and the second output element 1018 are inserted into the output register 920, the plurality of output elements may include rotated prior elements d(N-1) and d1 in the plurality of output elements 1024. The plurality of input elements 902 may be grouped into different sets of input elements and different results may be generated when the section grouping size of the sectioned vector arithmetic reduction instruction 1001 is a different size.

During operation, the processor may receive the rotate sectioned vector arithmetic reduction instruction 1001. The processor may execute the rotate sectioned vector arithmetic reduction instruction 1001 using the plurality of input elements 902 to generate and store the multiple output elements 1024 in the output register 920. Contents (e.g., the plurality of prior elements 922) of the output register may be selectively rotated based on the rotate sectioned vector arithmetic reduction instruction 1001, and results may be generated based on the plurality of input elements 902 being grouped into one or more groups of input elements based on the section grouping size and may be inserted into the output register 920.

Referring to FIG. 11A, a diagram of a first illustrative embodiment of executing a cumulative vector arithmetic reduction instruction with masking is disclosed and generally designated 1100. The cumulative vector arithmetic reduction instruction may be the cumulative vector arithmetic reduction instruction 101 of FIG. 1 in an illustrative, non-limiting example. The cumulative vector arithmetic reduction instruction may identify a mask 1130 (e.g., a vector mask). As explained with reference to FIG. 1, the mask 1130 may be indicated by a value stored in the third field 186 (Q) of the cumulative vector arithmetic reduction instruction 101. For example, the mask 1130 may be included in the cumulative vector arithmetic reduction instruction or may be indicated by a pointer included in the instruction, where the pointer points to a location in a data structure or a register where the mask 1130 is stored. Individual values (e.g., elements) of the plurality of elements 102 may be masked (e.g., provided as a zero value to a reduction tree for use in generating one or more output elements) based on a corresponding element of the mask 1130 being equal to zero. Alternately, the values may be masked based on elements of the mask 1130 being equal to one.

During execution of the cumulative vector arithmetic reduction instruction, the mask 1130 may be applied to the plurality of elements 102 prior to providing the first element 104 as the first output element 112. Applying the mask 1130 may include providing a zero value for a particular element of the plurality of elements 102 conditioned upon a corresponding mask value of the mask 1130. As shown, the input vector 122 includes the elements s0, s1, s2, and s(N-1) prior to application of the mask 1130 to the plurality of elements 102. After applying the mask 1130, the plurality of elements 102 includes s0, zero (provided in place of s1, based on the corresponding element of the mask 1130 being equal to zero), s2, and s(N-1). In another embodiment, applying the mask 1130 to the plurality of elements may include modifying a value of one or more elements of the plurality of elements 102 in the input vector 122. After applying the mask 1130 to the plurality of elements 102, execution of the cumulative vector arithmetic reduction instruction may proceed as explained with reference to FIG. 1. Accordingly, the output vector 120 may include the first output element 112 equal to s0, the second output element 114 equal to 0+s0 (e.g., s0), the third output element 116 equal to s2+s0, and the Nth output element 118 equal to s0+s2+ ... +s(N-1).

Referring to FIG. 11B, a diagram of a second illustrative embodiment of executing a cumulative vector arithmetic instruction that includes masking is disclosed and generally designated 1101. Executing the cumulative vector arithmetic reduction instruction may include applying a mask 1130 to the output vector 120.

During execution of the cumulative vector arithmetic reduction instruction, the mask 1130 may be applied to the output vector 120 to generate a masked output vector 1126. Applying the mask 1130 as shown may result in the masked output vector 1126 having elements s0, zero, s0+s1+s2, and s0+s1+s2+ ... +s(N-1). Although FIG. 11B shows application of the mask 1130 after output elements are stored in the output vector 120, the mask 1130 may be applied to results of arithmetic operations prior to populating the output vector 120. For example, one or more outputs (e.g., s0+s1) may be prevented from being stored in the output vector 120 based on the mask 1130, so that a prior value in the output vector 120 is not overwritten. In a particular embodiment, the output vector 120 and the masked output vector 1126 may be stored at a same location, such as at a same register.

Additionally, the masking shown in FIGS. 11A-B may also be applied in a similar manner to the sectioned vector arithmetic reduction instruction 901 of FIG. 9 or the rotate sectioned vector arithmetic reduction instruction 1001 of FIG. 10. For example, during execution of the sectioned vector arithmetic reduction instruction 901 the mask 1130 may be applied to the plurality of elements 102 prior to grouping the plurality of elements 102. As another example, during execution of the rotate sectioned vector arithmetic reduction instruction 1001 the mask 1130 may be applied to the output vector 120 after rotating contents of an output register storing with the output vector 120 (e.g., after rotating contents of the output vector 120).

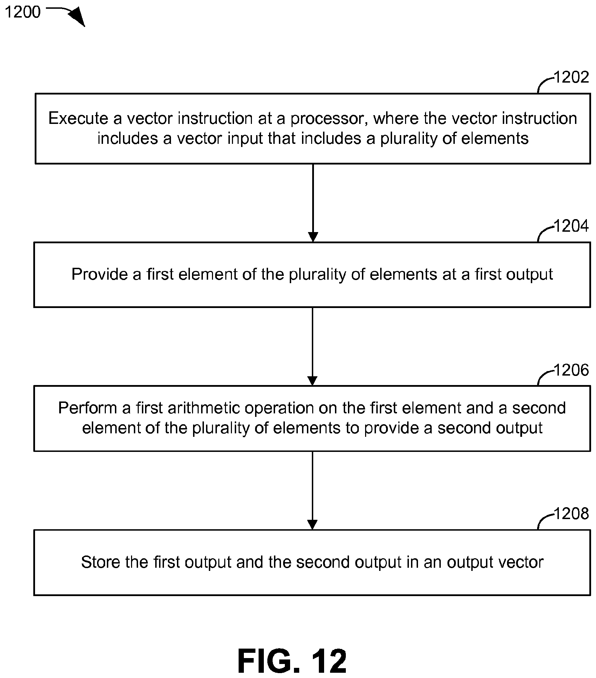

Referring to FIG. 12, a flow chart of an illustrative embodiment of a method 1200 of performing a cumulative vector arithmetic reduction instruction is illustrated. The cumulative vector arithmetic reduction instruction may be the cumulative vector arithmetic reduction instruction 101 of FIG. 1 or the vector instruction 220 of FIG. 2. In a particular embodiment, the method 1200 may be performed by the processor 202 of FIG. 2.

A vector instruction may be executed at the processor at 1202. The vector instruction may be the cumulative vector arithmetic reduction instruction 101 of FIG. 1. The vector instruction may include a vector input that includes a plurality of input elements. For example, the vector input may be the input vector 122 of FIGS. 1-6. The vector input may include the plurality of input elements 102 of FIG. 1. The plurality of input elements (e.g., the vector input) may be stored in a sequential order. The vector input may be identified by the vector instruction. For example, the vector input may be identified by a value stored in a particular field (e.g., a parameter), such as the third field 184 of the vector arithmetic reduction instruction 101 of FIG. 1.

A first input element of the plurality of input elements may be provided as a first output element, at 1204. The first input element may be the first element 104 (s0) of FIG. 1, and the first output element may be the first output element 112 (s0) of FIG. 1. For example, the first input element may be provided (e.g., generated) as the first output element by adding a zero input (e.g., a value equal to logical zero) to the first input element. The zero input may be added based on a control signal from control logic included in the processor, such as described with reference to FIG. 7.

A first arithmetic operation may be performed on the first input element and a second input element of the plurality of input elements, at 1206, to provide (e.g., generate) a second output element. For example, the first arithmetic operation may be an addition operation. In other embodiments, the first arithmetic operation may be a subtraction operation. The second input element may be the second element 106 (s1) of FIG. 1, and the second output element may be the second output element 114 (s0+s1) of FIG. 1. For example, a value equal to a sum of the first input element and the second input element may be generated (e.g., provided) as the second output element. Each input element and each output element may include a plurality of sub-elements, and addition may be performed on a sub-element by sub-element basis in an interleaved manner, such as described with reference to FIGS. 3-4.

The first output element and the second output element may be stored in an output vector, at 1208. The output vector may be the output vector 120 of FIGS. 1-6. For example, the first output element (e.g., a value equal to the first input element) and the second output element (e.g., a value equal to the sum of the first input element and the second input element) may be stored in different output elements of the output vector, as shown in FIG. 1.

Additional output elements may be generated in this manner. For example, a second arithmetic operation may be performed on the first input element, the second input element, and a third input element of the plurality of input elements to generate (e.g., provide) a third output element. Thus, a particular output element may be generated by performing a particular arithmetic operation on a particular element of the plurality of input elements and one or more other input elements of the plurality of elements that are sequentially prior to the particular input element in the sequential order.

In accordance with the method 1200, multiple output elements (e.g., the first output element and the second output element) may be generated and may represent multiple partial results of cumulative vector arithmetic reduction. By generating multiple partial results during execution of a single vector instruction, the method 1200 may provide storage and power consumption improvements as compared to generating the multiple partial results during execution of multiple vector instructions.

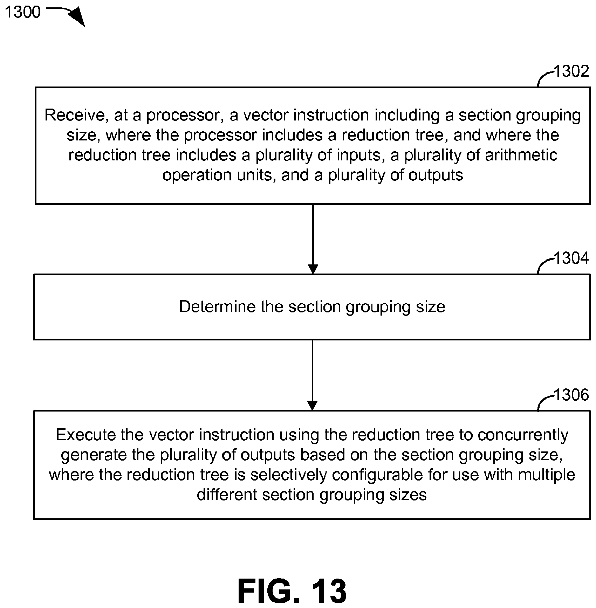

Referring to FIG. 13, a flow chart of an illustrative embodiment of a method 1300 of performing a vector instruction using a reduction tree is illustrated. The vector instruction may be the vector instruction 220 of FIG. 2 or the sectioned vector arithmetic reduction instruction 901 of FIG. 9. In a particular embodiment, the method 1300 may be performed by the processor 202 of FIG. 2.

A vector instruction including a section grouping size may be received at the processor, at 1302. For example, the vector instruction may be the sectioned vector arithmetic reduction instruction 901 of FIG. 9 having a section grouping size indicated by the fifth field 990. The processor may include the reduction tree. The reduction tree may include the reduction tree 206 of FIG. 2, the reduction trees 300-600 of FIGS. 3-6, the portion of the reduction tree 700 of FIG. 7, the reduction tree 800 of FIG. 8, or any combination thereof. The reduction tree may include a plurality of inputs, a plurality of arithmetic operation units, and a plurality of outputs. For example, the plurality of inputs may be the plurality of input elements 802 of FIG. 8 or the plurality of input elements 902 of FIG. 9, the plurality of arithmetic operation units may be the plurality of adders 804 of FIG. 8, and the plurality of outputs may be the multiple output elements 806 of FIG. 8 or the multiple output elements 924 of FIG. 9, as illustrative examples.

The section grouping size may be determined, at 1304. For example, the section grouping size may be determined based on a particular field of the vector instruction, such as the fifth field 990 of FIG. 9. The section grouping size may indicate a size of one or more groups associated with the plurality of input elements during execution of the vector instruction.

The vector instruction may be executed using the reduction tree to concurrently generate the plurality of outputs based on the section grouping size, at 1306. For example, executing the vector instruction may include grouping the plurality of input elements into one or more groups having the section grouping size and performing one or more arithmetic operations on the one or more groups to generate the plurality of outputs. The plurality of outputs may be generated during a single processing cycle of the processor based on the vector reduction instruction.

The reduction tree may be selectively configurable for use with multiple different section grouping sizes. For example, a configuration of the reduction tree may be associated with a particular section grouping size. The configuration of the reduction tree may be associated with a particular subset of arithmetic operation units being enabled and a particular subset of arithmetic operation unit inputs being selected (e.g., a particular subset of paths being enabled), such as subsets of the plurality of adders 804 and the plurality of paths 830-844 of FIG. 8. After determining the section grouping size in the vector instruction, the processor may determine whether the reduction tree is configured for use with the section grouping size (e.g., whether the reduction tree is in a particular configuration associated with the section grouping size). In response to a determination that the reduction tree is not configured for use with the section grouping size, the configuration of the reduction tree may be altered based on the section grouping size. For example, one or more arithmetic operation units of the plurality of arithmetic operation units may be enabled and one or more arithmetic operation unit inputs may be selected based on the section grouping size. In response to a determination that the reduction tree is configured for use with the section grouping size, the vector instruction may be executed using the reduction tree. For example, when the reduction tree is already configured in a particular configuration associated with the section grouping size, the reduction tree may not be altered prior to execution of the vector instruction.

In accordance with the method 1300, the reduction tree may be selectively configurable for use with multiple instructions having different section grouping sizes. Using the single reduction tree may enable reduced device size and power consumption as compared to a processor that includes multiple reduction trees for use during execution of multiple instructions having different section grouping sizes.

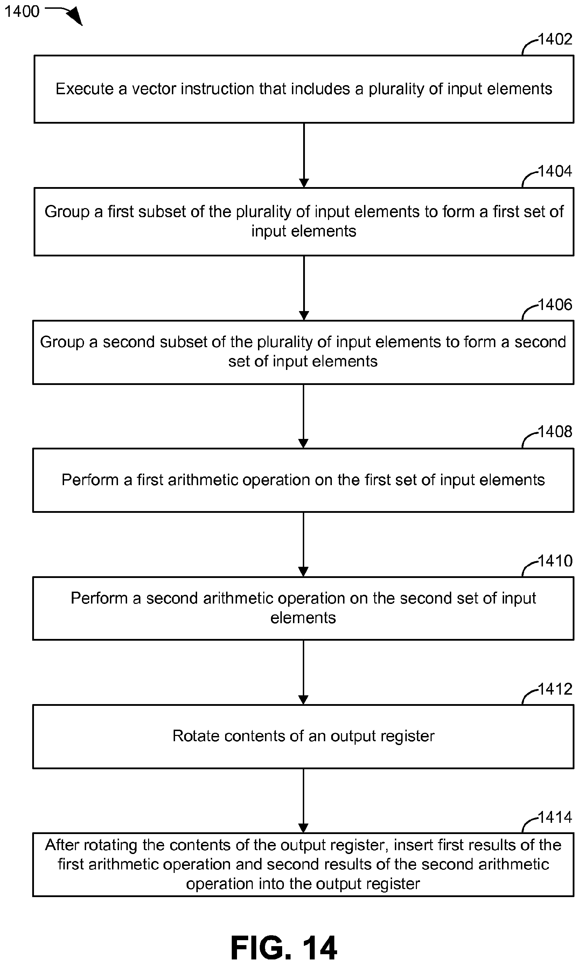

Referring to FIG. 14, a flow chart of an illustrative embodiment of a method 1400 of performing a rotate sectioned vector arithmetic reduction instruction is illustrated. The rotate sectioned vector arithmetic reduction instruction may be the vector instruction 220 of FIG. 2 or the rotate sectioned vector arithmetic reduction instruction 1001 of FIG. 10. In a particular embodiment, the method 1400 may be performed by the processor 202 of FIG. 2.

A vector instruction that includes a plurality of input elements may be executed, at 1402. For example, the vector instruction may be the rotate sectioned vector arithmetic reduction instruction 1001 and the plurality of input elements may be the plurality of input elements 902 of FIG. 10.

A first subset of the plurality of input elements may be grouped to form a first set of input elements, at 1404. For example, the first set of input elements may be the first set of input elements 1004 of FIG. 10. The first subset of the plurality of input elements may be grouped to form the first set of input elements based on a section grouping size included in the rotate sectioned vector arithmetic reduction instruction. For example, the section grouping size may be identified by a particular field (e.g., a parameter) of the rotate sectioned vector arithmetic reduction instruction, such as the fifth field 1090 of the rotate sectioned vector arithmetic reduction instruction 1001 of FIG. 10.

A second subset of the plurality of input elements may be grouped to form a second set of input elements, at 1406. For example, the second set of input elements may be the second set of input elements 1006 of FIG. 10. The second subset of the plurality of input elements may be grouped to form the second set of input elements based on the section grouping size included in the rotate sectioned vector arithmetic reduction instruction. In a particular embodiment, a size of the first set of input elements and a size of the second set of input elements may be the same. In an alternate embodiment, the size of the first set of input elements and the size of the second set of input elements may be different sizes.

A first arithmetic operation may be performed on the first set of input elements, at 1408. For example, a first addition operation may be performed on the first set of input elements. In a particular embodiment, the first arithmetic operation may be indicated by an operation vector. The operation vector may be indicated by a value stored in a particular field (e.g., a parameter) of the rotate sectioned vector arithmetic reduction instruction, such as the fourth field 1088 of the rotate sectioned vector arithmetic reduction instruction 1001 of FIG. 10.

A second arithmetic operation may be performed on the second set of input elements, at 1410. For example, a second addition operation may be performed on the second set of input elements. In a particular embodiment, the second arithmetic operation may be indicated by the operation vector.

Contents of an output register may be rotated, at 1412. For example, the output register may be the output register 1020 of FIG. 10 and may contain a plurality of prior elements (e.g., contents), such as the plurality of prior elements 922 of FIG. 10. The output register may be identified by a value stored in a particular field (e.g., a parameter) of the rotate sectioned vector arithmetic reduction instruction, such as the second field 1084 of the rotate sectioned vector arithmetic reduction instruction 1001 of FIG. 10. The plurality of prior elements may be results generated by a previously-executed vector instruction or may be a plurality of null values, as illustrative examples. In a particular embodiment, the plurality of prior elements may be results of a previously executed rotate sectioned vector arithmetic reduction instruction. Rotating the contents of the output register may include selectively (e.g., optionally) rotating the contents of the output register based on a value stored in a particular field (e.g., a parameter) of the rotate sectioned vector arithmetic reduction instruction, such as the eighth field 1096 (e.g., a rotation field) of the rotate sectioned vector arithmetic reduction instruction 1001 of FIG. 10. For example, the value stored in the rotation field may indicate a size of rotation and a direction of rotation, and the contents of the output register may be rotated by the size of rotation and in the direction of rotation. The contents of the output register may be overwritten (e.g., set equal to a zero value) based on a particular field of the rotate sectioned vector arithmetic reduction instruction.

After rotating the contents of the output register, first results of the first arithmetic operation and second results of the second arithmetic operation may be inserted into the output register, at 1414. For example, the first results may be inserted in a first output element of the output register and the second results may be inserted into a second output element of the output register. The first output element may be the first output element 1016 of FIG. 10 and the second output element may be the second output element 1018 of FIG. 10. The first results and the second results may overwrite values that were previously stored (and rotated, at 1412) in the output register.

According to the method 1400, rotation and sectioned vector arithmetic reduction may be performed for multiple section grouping sizes through execution of a single vector instruction using a single reduction tree. Using the single reduction tree may enable reduced device size and power consumption as compared to a processor that includes multiple reduction trees for use during execution of multiple instructions having different section grouping sizes.

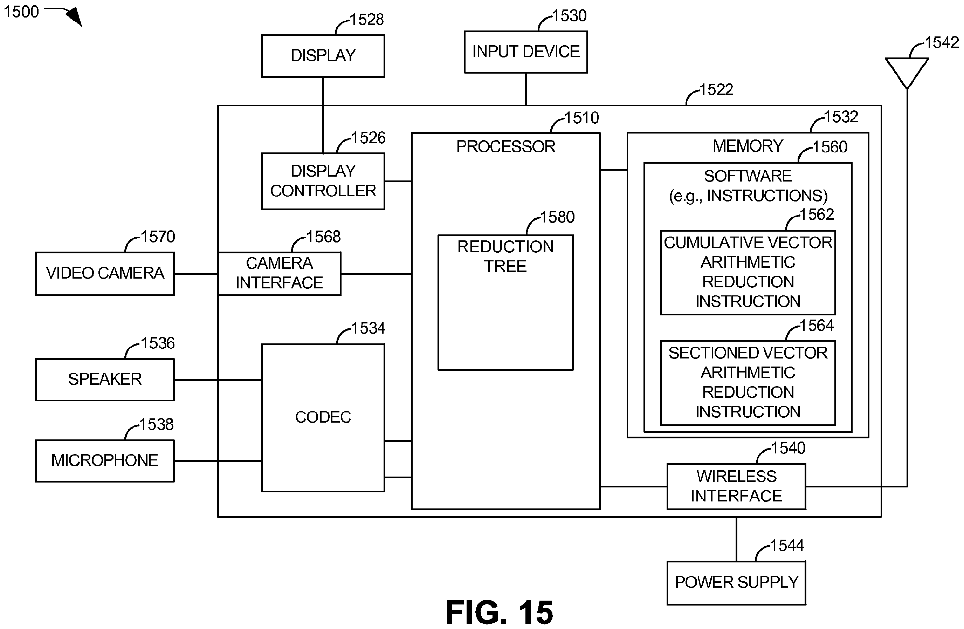

Referring to FIG. 15, a block diagram of a particular illustrative embodiment of a device (e.g., a communication device) including a reduction tree 1580 used in execution of a cumulative vector arithmetic reduction instruction 1562 and a sectioned vector arithmetic reduction instruction 1564, is depicted and generally designated 1500. The reduction tree 1580 may include the reduction tree 206 of FIG. 2, the reduction trees 300-600 of FIGS. 3-6, the portion of the reduction tree 700 of FIG. 7, or the reduction tree 800 of FIG. 8, as illustrative examples. The device 1500 may be a wireless electronic device and may include a processor, such as a digital signal processor (DSP) 1510, coupled to a memory 1532.

The processor 1510 may be configured to execute computer-executable instructions 1560 (e.g., a program of one or more instructions) stored in the memory 1532 (e.g., a computer-readable storage medium). The instructions 1560 may include the cumulative vector arithmetic reduction instruction 1562 and/or the sectioned vector arithmetic reduction instruction 1564. The cumulative vector arithmetic reduction instruction 1562 may be the cumulative vector arithmetic reduction instruction 101 of FIG. 1 or the vector instruction 220 of FIG. 2. The sectioned vector arithmetic reduction instruction 1564 may be the vector instruction 220 of FIG. 2, the sectioned vector arithmetic reduction instruction 901 of FIG. 9, or the rotate sectioned vector arithmetic reduction instruction 1001 of FIG. 10.

A camera interface 1568 is coupled to the processor 1510 and is also coupled to a camera, such as a video camera 1570. A display controller 1526 is coupled to the processor 1510 and to a display 1528. A coder/decoder (CODEC) 1534 may also be coupled to the processor 1510. A speaker 1536 and a microphone 1538 may be coupled to the CODEC 1534. A wireless interface 1540 may be coupled to the processor 1510 and to an antenna 1542 such that wireless data received via the antenna 1542 and the wireless interface 1540 may be provided to the processor 1510.

In a particular embodiment, the processor 1510 may be configured to execute the computer executable instructions 1560 stored at a non-transitory computer-readable medium, such as the memory 1532, that are executable to cause a computer, such as the processor 1510, to provide a first element of a plurality of elements as a first output element. The computer executable instructions 1560 may include the cumulative vector arithmetic reduction instruction 1562. The plurality of elements may be the plurality of elements 102 of FIG. 1 and may be stored in an input vector, such as the input vector 122 of FIGS. 1-6. The computer executable instructions 1560 may be further executable by the computer to perform an arithmetic operation on the first element and a second element of the plurality of elements to provide a second output. The computer executable instructions 1560 may be further executable by the computer to store the first output and the second output in an output vector. The output vector may be the output vector 120 of FIGS. 1-6.

In a particular embodiment, the processor 1510 may be configured to execute the computer executable instructions 1560 stored at a non-transitory computer-readable medium, such as the memory 1532, that are executable to cause a computer, such as the processor 1510, to receive a vector instruction including a section grouping size. The vector instruction may be the sectioned vector arithmetic reduction instruction 1564. The computer executable instructions 1560 may be further executable to determine the section grouping size. The computer executable instructions 1560 may be further executable to execute the vector instruction using a reduction tree to concurrently generate a plurality of outputs based on the section grouping size. The reduction tree may include the reduction tree 206 of FIG. 2, the reduction trees 300-600 of FIGS. 3-6, the portion of the reduction tree 700 of FIG. 7, or the reduction tree 800 of FIG. 8, as illustrative examples. The reduction tree may include a plurality of inputs, a plurality of arithmetic operation units, and the plurality of outputs. The reduction tree may be selectively configurable for use with multiple different section grouping sizes.

In a particular embodiment, the processor 1510, the display controller 1526, the memory 1532, the CODEC 1534, the wireless interface 1540, and the camera interface 1568 are included in a system-in-package or system-on-chip device 1522. In a particular embodiment, an input device 1530 and a power supply 1544 are coupled to the system-on-chip device 1522. Moreover, in a particular embodiment, as illustrated in FIG. 15, the display 1528, the input device 1530, the speaker 1536, the microphone 1538, the antenna 1542, the video camera 1570, and the power supply 1544 are external to the system-on-chip device 1522. However, each of the display 1528, the input device 1530, the speaker 1536, the microphone 1538, the antenna 1542, the video camera 1570 and the power supply 1544 may be coupled to a component of the system-on-chip device 1522, such as an interface or a controller.

The methods 1200-1400 of FIGS. 12-14 may be implemented by a field-programmable gate array (FPGA) device, an application-specific integrated circuit (ASIC), a processing unit such as a central processing unit (CPU), a digital signal processor (DSP), a controller, another hardware device, a firmware device, or any combination thereof. As an example, the method 1200 of FIG. 12, the method 1300 of FIG. 13, the method 1400 of FIG. 14, or any combination thereof, may be initiated by a processor that executes instructions stored in the memory 1532, as described with respect to FIG. 15.

In conjunction with one or more of the described embodiments, an apparatus is disclosed that may include means for providing a first element of a plurality of elements as a first output. The means for providing may include one or more adders of a reduction tree, such as the reduction tree 206 of FIG. 2, the reduction trees 300-600 of FIGS. 3-6, the portion of the reduction tree 700 of FIG. 7, the reduction tree 800 of FIG. 8, one or more other devices or circuits configured to provide the first element as the first output, or any combination thereof. The apparatus may further include means for generating a second output based on the first element and a second element of the plurality of elements. The means for generating may include one or more adders of a reduction tree, such as the reduction tree 206 of FIG. 2, the reduction trees 300-600 of FIGS. 3-6, the portion of the reduction tree 700 of FIG. 7, the reduction tree 800 of FIG. 8, one or more other devices or circuits configured to generate the second output based on the first element and the second element, or any combination thereof. The apparatus may further include means for storing the first output and the second output in an output vector. The means for storing may include the reduction tree 206 of FIG. 2, the reduction trees 300-600 of FIGS. 3-6, the portion of the reduction tree 700 of FIG. 7, the reduction tree 800 of FIG. 8, one or more other devices or circuits configured to store outputs in the output vector, or any combination thereof.

The apparatus may also include means for saturating the second output. The means for saturating the second output may include the first saturation logic circuit 730 or the second saturation logic circuit 732 of FIG. 7, one or more other devices or circuits configured to saturate an output, or any combination thereof.

In conjunction with one or more of the described embodiments, an apparatus is disclosed that may include means for concurrently generating a plurality of outputs based on a vector instruction. The means for concurrently generating may include the reduction tree 206 of FIG. 2, the reduction trees 300-600 of FIGS. 3-6, the portion of the reduction tree 700 of FIG. 7, the reduction tree 800 of FIG. 8, one or more other devices or circuits configured to concurrently generate a plurality of outputs based on a vector instruction, or any combination thereof. The means for concurrently generating may be used by a processor during execution of a first instruction that includes a first section grouping size and during execution of a second instruction that includes a second section grouping size.

One or more of the disclosed embodiments may be implemented in a system or an apparatus, such as the device 1500, that may include a set top box, an entertainment unit, a navigation device, a communications device, a personal digital assistant (PDA), a fixed location data unit, a mobile location data unit, a mobile phone, a cellular phone, a computer, a portable computer, a tablet, a desktop computer, a monitor, a computer monitor, a television, a tuner, a radio, a satellite radio, a music player, a digital music player, a portable music player, a video player, a digital video player, a digital video disc (DVD) player, a portable digital video player, or a combination thereof. As another illustrative, non-limiting example, the system or the apparatus may include remote units, such as mobile phones, hand-held personal communication systems (PCS) units, portable data units such as personal data assistants, global positioning system (GPS) enabled devices, navigation devices, fixed location data units such as meter reading equipment, or any other device that stores or retrieves data or computer instructions, or any combination thereof. Although one or more of FIGS. 1-15 may illustrate systems, apparatuses, and/or methods according to the teachings of the disclosure, the disclosure is not limited to these illustrated systems, apparatuses, and/or methods. Embodiments of the disclosure may be suitably employed in any device that includes integrated circuitry including memory and on-chip circuitry.

One or more of the disclosed embodiments may be implemented in a system or an apparatus, such as the device 1500, that may include a communications device, a fixed location data unit, a mobile location data unit, a mobile phone, a cellular phone, a computer, a tablet, a portable computer, or a desktop computer. Additionally, the device 1500 may include a set top box, an entertainment unit, a navigation device, a personal digital assistant (PDA), a monitor, a computer monitor, a television, a tuner, a radio, a satellite radio, a music player, a digital music player, a portable music player, a video player, a digital video player, a digital video disc (DVD) player, a portable digital video player, any other device that stores or retrieves data or computer instructions, or a combination thereof. As another illustrative, non-limiting example, the system or the apparatus may include remote units, such as mobile phones, hand-held personal communication systems (PCS) units, portable data units such as personal data assistants, global positioning system (GPS) enabled devices, navigation devices, fixed location data units such as meter reading equipment, or any other device that stores or retrieves data or computer instructions, or any combination thereof.

Although one or more of FIGS. 1-15 may illustrate systems, apparatuses, and/or methods according to the teachings of the disclosure, the disclosure is not limited to these illustrated systems, apparatuses, and/or methods. Embodiments of the disclosure may be suitably employed in any device that includes integrated circuitry including memory, a processor, and on-chip circuitry.

Those of skill would further appreciate that the various illustrative logical blocks, configurations, modules, circuits, and algorithm steps described in connection with the embodiments disclosed herein may be implemented as electronic hardware, computer software executed by a processor, or combinations of both. Various illustrative components, blocks, configurations, modules, circuits, and steps have been described above generally in terms of their functionality. Whether such functionality is implemented as hardware or as executing software depends upon the particular application and design constraints imposed on the overall system. Skilled artisans may implement the described functionality in varying ways for each particular application, but such implementation decisions should not be interpreted as causing a departure from the scope of the present disclosure.

The steps of a method or algorithm described in connection with the embodiments disclosed herein may be embodied directly in hardware, in a software module executed by a processor, or in a combination of the two. A software module may reside in random access memory (RAM), flash memory, read-only memory (ROM), programmable read-only memory (PROM), erasable programmable read-only memory (EPROM), electrically erasable programmable read-only memory (EEPROM), registers, hard disk, a removable disk, a compact disc read-only memory (CD-ROM), or any other form of storage medium known in the art. An exemplary non-transitory (e.g. tangible) storage medium is coupled to the processor such that the processor can read information from, and write information to, the storage medium. In the alternative, the storage medium may be integral to the processor. The processor and the storage medium may reside in an application-specific integrated circuit (ASIC). The ASIC may reside in a computing device or a user terminal. In the alternative, the processor and the storage medium may reside as discrete components in a computing device or user terminal.

The previous description of the disclosed embodiments is provided to enable a person skilled in the art to make or use the disclosed embodiments. Various modifications to these embodiments will be readily apparent to those skilled in the art, and the principles defined herein may be applied to other embodiments without departing from the scope of the disclosure. Thus, the present disclosure is not intended to be limited to the embodiments shown herein but is to be accorded the widest scope possible consistent with the principles and novel features as defined by the following claims.

## Claims

1. A method comprising:
executing (1202) a single cumulative vector arithmetic reduction instruction (101) in a processor, the processor comprising a reduction tree (206, 300) comprising a plurality of arithmetic operation units (320, 321) arranged in a multiple of rows, a plurality of inputs (302, 304), and a plurality of outputs (306, 308), and wherein one or more arithmetic operation units (320, 321) may be selectively enabled in one or more rows based on the single cumulative vector arithmetic reduction instruction (101), and wherein the single cumulative vector arithmetic reduction instruction comprises a vector input that includes a plurality of elements, and wherein executing the vector instruction comprises:
providing (1204) a first element of the plurality of elements as a first output element;
configuring the reduction tree for
performing (1206) a first arithmetic operation on the first element and a second element of the plurality of elements to provide a second output element wherein the first arithmetic operation comprises at least one of addition and subtraction; and
for performing a second arithmetic operation on the first element, the second element, and a third element of the plurality of elements to provide a third output, wherein the first second and third elements are sequential;
storing (1208) the first output element, the second output element and the third output element in an output vector during a single execution cycle of the processor.

2. The method of claim 1, wherein executing the single cumulative vector arithmetic reduction instruction (101) further comprises storing each of multiple output elements in different output elements of the output vector, and wherein the multiple output elements include the first output element, the second output element and the third output element.

3. The method of claim 1, wherein a first size of the vector input is the same as a second size of the output vector.

4. The method of claim 3, wherein an Nth output element of N output elements is equal to a sum of the Nth input element and the N-1 sequentially previous input elements.

5. The method of claim 1, wherein executing the single cumulative vector arithmetic reduction instruction (101) further comprises applying a mask to the plurality of elements prior to providing the first element as the first output element; or
applying a mask to the output vector.

6. The method of claim 5, wherein executing the single cumulative vector arithmetic reduction instruction (101) includes generating a plurality of outputs including the first output and the second output, and wherein applying the mask comprises providing a zero value for a particular element of the plurality of elements for use in generating the plurality of outputs conditioned upon a corresponding mask value of the mask.

7. The method of claim 1, wherein executing the single cumulative vector arithmetic reduction instruction (101) further comprises, when the plurality of vector input elements have a complex number input type:
generating a first real number sub-element of the first output element and a first imaginary number sub-element of the first output element; and
generating a second real number sub-element of the second output element and a second imaginary number sub-element of the second output element,
wherein storing the first output element and the second output element in an output vector includes storing the first real number sub-element of the first output and the first imaginary number sub-element of the first output element and the second real number sub-element of the second output element and the second imaginary number sub-element of the second output element in the output vector during the single execution cycle of the processor.

8. An apparatus comprising:
a processor (202), wherein during execution of a single cumulative vector arithmetic reduction instruction (101) that identifies a vector input that includes a plurality of elements, the processor comprising a reduction tree (206, 300) comprising a plurality of arithmetic operation units (320, 321) arranged in a multiple of rows, a plurality of inputs (302, 304), and a plurality of outputs (306, 308), and wherein one or more arithmetic operation units (320, 321) may be selectively enabled in one or more rows based on the single cumulative vector arithmetic reduction instruction (101), and wherein the processor is configured to:
provide a first element (104) of the plurality of elements as a first output element (112); and wherein the reduction tree is configured to
perform a first arithmetic operation on the first element and a second element (106) of the plurality of elements to provide a second output element (114); wherein the first arithmetic operation comprises at least one of addition and subtraction;
and to perform a second arithmetic operation on the first element, the second element, and a third element of the plurality of elements to provide a third output, wherein the first second and third elements are sequential;
and
store the first output element, the second output element and the third output element in an output vector (120) during a single execution cycle of the processor.

9. The apparatus of claim 8, wherein a particular arithmetic operation unit of the plurality of arithmetic operation units is coupled to a saturation logic circuit configured to saturate an output of the particular arithmetic operation unit.

10. The apparatus of claim 8, wherein the processor further comprises control logic (210) configured to selectively enable one or more arithmetic operation units of the plurality of arithmetic operation units based on the vector instruction, and wherein the first output element and the second output element are provided via the one or more arithmetic operation units.

11. The apparatus of claim 8, wherein the first arithmetic operation is performed by a plurality of sub-adders (322-328), wherein each sub-adder of the plurality of sub-adders stores an output element in the output vector.

12. A non-transitory computer readable medium comprising instructions that, when executed by an apparatus according to any of claims 8-11, cause the processor to perform the method of any of claims 1 to 7.

## Patentansprüche

1. Ein Verfahren, das Folgendes aufweist:
Ausführen (1202) eines einzelnen Befehls (101) zur kumulativen Vektorarithmetikreduktion in einem Prozessor, wobei der Prozessor einen Reduktionsbaum (206, 300) aufweist, der eine Vielzahl von Arithmetikoperationseinheiten (320, 321), die in mehreren Zeilen angeordnet sind, eine Vielzahl von Eingängen (302, 304) und eine Vielzahl von Ausgängen (306, 308) aufweist, und wobei eine oder mehrere Arithmetikoperationseinheiten (320, 321) selektiv in einer oder mehreren Zeilen aktiviert werden können basierend auf dem einzelnen Befehl zur kumulativen Vektorarithmetikreduktion (101) und wobei der einzelne Befehl zur kumulativen Vektorarithmetikreduktion eine Vektoreingabe aufweist, die eine Vielzahl von Elementen enthält, und wobei das Ausführen des Vektorbefehls Folgendes aufweist:
Vorsehen (1204) eines ersten Elements der Vielzahl von Elementen als ein erstes Ausgabeelement;
Konfigurieren des Reduktionsbaums zum
Durchführen (1206) einer ersten Arithmetikoperation an dem ersten Element und einem zweiten Element der Vielzahl von Elementen zum Vorsehen eines zweiten Ausgabeelements, wobei die erste Arithmetikoperation wenigstens eines von Addition und Subtraktion aufweist; und
zum Durchführen einer zweiten Arithmetikoperation an dem ersten Element, dem zweiten Element und einem dritten Element der Vielzahl von Elementen zum Vorsehen einer dritten Ausgabe, wobei die ersten, zweiten und dritten Elemente sequenziell sind;
Speichern (1208) des ersten Ausgabeelements, des zweiten Ausgabeelements und des dritten Ausgabeelements in einem Ausgabevektor während eines einzelnen Ausführungszyklus des Prozessors.

2. Verfahren nach Anspruch 1, wobei das Ausführen des einzelnen Befehls (101) zur kumulativen Vektorarithmetikreduktion weiter Speichern jedes von mehreren Ausgabeelementen in unterschiedlichen Ausgabeelementen des Ausgabevektors aufweist, und wobei die mehreren Ausgabeelemente das erste Ausgabeelement, das zweite Ausgabeelement und das dritte Ausgabeelement beinhalten.

3. Verfahren nach Anspruch 1, wobei eine erste Größe der Vektoreingabe die gleiche ist wie eine zweite Größe des Ausgabevektors.

4. Verfahren nach Anspruch 3, wobei ein N-tes Ausgabeelement von N Ausgabeelementen gleich einer Summe des N-ten Eingabeelements und der N-1 sequenziellen vorherigen Eingabeelemente ist.

5. Verfahren nach Anspruch 1, wobei Ausführen des einzelnen Befehls (101) zur kumulativen Vektorarithmetikreduktion weiter Anwenden einer Maske auf die Vielzahl von Elementen vor Vorsehen des ersten Elements als das erste Ausgabeelement aufweist; oder
Anwenden einer Maske auf den Ausgabevektor.

6. Verfahren nach Anspruch 5, wobei das Ausführen des einzelnen Befehls (101) zur kumulativen Vektorarithmetikreduktion Generieren einer Vielzahl von Ausgaben beinhaltet, die die erste Ausgabe und die zweite Ausgabe beinhalten, und wobei das Anwenden der Maske Vorsehen eines Nullwertes für ein bestimmtes Element der Vielzahl von Elementen zur Verwendung beim Generieren der Vielzahl von Ausgaben aufweist, und zwar abhängig von einen entsprechenden Maskenwert der Maske.

7. Verfahren nach Anspruch 1, wobei das Ausführen des einzelnen Befehls (101) zur kumulativen Vektorarithmetikreduktion weiter, wenn die Vielzahl von Vektoreingabeelementen einen Eingabetyp einer komplexen Zahl haben:
Generieren eines ersten Subelements, das eine reelle Zahl ist, aus dem ersten Ausgabeelement, und eines ersten Subelements, das eine imaginäre Zahl ist, aus dem ersten Ausgabeelement; und
Generieren eines zweiten Subelements, das eine reelle Zahl ist, aus dem zweiten Ausgabeelement, und eines zweiten Subelements, das eine imaginäre Zahl ist, aus dem zweiten Ausgabeelement,
wobei das Speichern des ersten Ausgabeelements und des zweiten Ausgabeelements in einem Ausgabevektor Speichern des ersten Subelements, das eine reelle Zahl ist, der ersten Ausgabe und des ersten Subelements, das eines imaginäre Zahl ist, des ersten Ausgabeelements und des zweiten Subelements, das eine reelle Zahl ist, des zweiten Ausgabeelements, und des zweiten Subelements, das eine imaginäre Zahl ist, des zweiten Ausgabeelements in dem Ausgabevektor während des einzelnen Ausführungszyklus des Prozessors, aufweist.

8. Eine Vorrichtung, die Folgendes aufweist:
einen Prozessor (202), wobei während der Ausführung eines einzelnen Befehls (101) zur kumulativen Vektorarithmetikreduktion, der eine Vektoreingabe identifiziert, die eine Vielzahl von Elementen beinhaltet, der Prozessor einen Reduktionsbaum (206, 300) aufweist, der eine Vielzahl von Arithmetikoperationseinheiten (320, 321), die in einer Vielzahl von Zeilen angeordnet sind, eine Vielzahl von Eingängen (302, 304) und eine Vielzahl von Ausgängen (306, 308) aufweist, und wobei eine oder mehrere Arithmetikoperationseinheiten (320, 321) selektiv in einer oder mehreren Zeilen aktiviert werden können basierend auf dem einzelnen Befehl zur kumulativen Vektorarithmetikreduktion (101) und wobei der Prozessor konfiguriert ist zum:
Vorsehen eines ersten Elements (104) der Vielzahl von Elementen als ein erstes Ausgabeelement (112); und wobei der Reduktionsbaum konfiguriert ist zum
Durchführen einer ersten Arithmetikoperation an dem ersten Element und einem zweiten Element (106) der Vielzahl von Elementen zum Vorsehen eines zweiten Ausgabeelements (114), wobei die erste Arithmetikoperation wenigstens eines von Addition und Subtraktion aufweist;
und zum Durchführen einer zweiten Arithmetikoperation an dem ersten Element, dem zweiten Element und einem dritten Element der Vielzahl von Elementen zum Vorsehen einer dritten Ausgabe, wobei die ersten, zweiten und dritten Elemente sequenziell sind;
und
Speichern des ersten Ausgabeelements, des zweiten Ausgabeelements und des dritten Ausgabeelements in einem Ausgabevektor (120) während eines einzelnen Ausführungszyklus des Prozessors.

9. Vorrichtung nach Anspruch 8, wobei eine bestimmte Arithmetikoperationseinheit der Vielzahl von Arithmetikoperationseinheiten an eine Sättigungslogikschaltung gekoppelt ist, die konfiguriert ist zum Sättigen einer Ausgabe der bestimmten Arithmetikoperationseinheit.

10. Vorrichtung nach Anspruch 8, wobei der Prozessor weiter Steuerlogik (210) aufweist, die konfiguriert ist zum selektiven Aktivieren einer oder mehrerer Arithmetikoperationseinheiten der Vielzahl von Arithmetikoperationseinheiten basierend auf dem Vektorbefehl, und wobei das erste Ausgabeelement und das zweite Ausgabeelement über die eine oder die mehreren Arithmetikoperationseinheiten vorgesehen werden.

11. Vorrichtung nach Anspruch 8, wobei die erste Arithmetikoperation durch eine Vielzahl von Subaddierern (322-328) durchgeführt wird, wobei jeder Subaddierer der Vielzahl von Subaddierern ein Ausgabeelement in dem Ausgabevektor speichert.

12. Ein nicht transitorisches computerlesbares Medium, das Instruktionen aufweist, die, wenn sie durch eine Vorrichtung nach einem der Ansprüche 8-11 ausgeführt werden, den Prozessor veranlassen zum Durchführen des Verfahrens nach einem der Ansprüche 1 bis 7.

## Revendications

1. Procédé comprenant les étapes consistant à :
exécuter (1202) une instruction unique à réduction arithmétique vectorielle cumulative (101) dans un processeur, le processeur comprenant un arbre de réduction (206, 300) comprenant une pluralité d'unités d'opération arithmétique (320, 321) agencées en une multiplicité de rangées, une pluralité d'entrées (302, 304) et une pluralité de sorties (306, 308), et dans lequel une ou plusieurs unités d'opération arithmétique (320, 321) peuvent être activées sélectivement dans une ou plusieurs lignes sur la base de l'instruction unique à réduction arithmétique vectorielle cumulative (101), et dans lequel l'instruction unique à réduction arithmétique vectorielle cumulative comprend une entrée vectorielle qui comprend une pluralité d'éléments, et dans lequel l'exécution de l'instruction vectorielle comprend les étapes consistant à :
fournir (1204) un premier élément de la pluralité d'éléments en tant que premier élément de sortie ;
configurer l'arbre de réduction pour
effectuer (1206) une première opération arithmétique sur le premier élément et un deuxième élément de la pluralité d'éléments pour fournir un deuxième élément de sortie dans lequel la première opération arithmétique comprend au moins l'une parmi l'addition et de la soustraction ; et
effectuer une deuxième opération arithmétique sur le premier élément, le deuxième élément et un troisième élément de la pluralité d'éléments pour fournir une troisième sortie, les premier et troisième éléments étant séquentiels ;
stocker (1208) le premier élément de sortie, le deuxième élément de sortie et le troisième élément de sortie dans un vecteur de sortie pendant un seul cycle d'exécution du processeur.

2. Procédé selon la revendication 1, dans lequel l'exécution de l'instruction unique à réduction arithmétique vectorielle cumulative (101) comprend en outre le stockage de chacun des multiples éléments de sortie dans différents éléments de sortie du vecteur de sortie, et dans lequel les multiples éléments de sortie comprennent le premier élément de sortie, le deuxième élément de sortie et le troisième élément de sortie.

3. Procédé selon la revendication 1, dans lequel une première taille du vecteur en entrée est identique à une deuxième taille du vecteur en sortie.

4. Procédé selon la revendication 3, dans lequel un N^{ième} élément de sortie de N éléments de sortie est égal à la somme du N^{ième} élément d'entrée et des N-1 éléments séquentiellement précédents.

5. Procédé selon la revendication 1, dans lequel l'exécution de l'instruction unique à réduction arithmétique vectorielle cumulative (101) comprend en outre les étapes consistant à :
appliquer un masque à la pluralité d'éléments avant de fournir le premier élément en tant que premier élément de sortie ; ou
appliquer un masque au vecteur de sortie.

6. Procédé selon la revendication 5, dans lequel l'exécution de l'instruction unique à réduction arithmétique vectorielle cumulative (101) comprend la génération d'une pluralité de sorties comprenant la première sortie et la deuxième sortie, et dans lequel l'application du masque comprend la fourniture d'une valeur nulle pour un élément particulier de la pluralité d'éléments à utiliser pour générer la pluralité de sorties, conditionnel à une valeur de masque correspondante du masque.

7. Procédé selon la revendication 1, dans lequel l'exécution de l'instruction unique à réduction arithmétique vectorielle cumulative (101) comprend en outre, lorsque la pluralité d'éléments d'entrée de vecteur ont un type correspondant à une entrée à nombre complexe :
générer un premier sous-élément de nombre réel du premier élément de sortie et un premier sous-élément de nombre imaginaire du premier élément de sortie ; et
générer un deuxième sous-élément de nombre réel du deuxième élément de sortie et un deuxième sous-élément de nombre imaginaire du deuxième élément de sortie,
dans lequel le stockage du premier élément de sortie et du deuxième élément de sortie dans un vecteur de sortie comprend le stockage du premier sous-élément de nombre réel du premier sortie et du premier sous-élément de nombre imaginaire du premier élément de sortie et du deuxième sous-élément de nombre réel du deuxième élément de sortie et le deuxième sous-élément de nombre imaginaire du deuxième élément de sortie dans le vecteur de sortie pendant le cycle d'exécution unique du processeur.

8. Un appareil comprenant :
un processeur (202), dans lequel lors de l'exécution d'une instruction unique à réduction arithmétique vectorielle cumulative (101) qui identifie une entrée vectorielle qui comprend une pluralité d'éléments, le processeur comprenant un arbre de réduction (206, 300) comprenant une pluralité d'unités d'opération arithmétique (320, 321) agencées en une pluralité de rangées, une pluralité de entrées (302, 304) et une pluralité de sorties (306, 308), une ou une pluralité de unités d'opération arithmétique (320, 321) pouvant être activées de manière sélective dans une ou une pluralité de lignes sur la base de l'instruction unique à réduction arithmétique vectorielle cumulative (101), et dans lequel le processeur est configuré pour :
fournir un premier élément (104) de la pluralité d'éléments en tant que premier élément de sortie (112) ; et dans lequel l'arbre de réduction est configuré pour
effectuer une première opération arithmétique sur le premier élément et un deuxième élément (106) de la pluralité d'éléments pour fournir un deuxième élément de sortie (114) ; dans lequel la première opération arithmétique comprend au moins l'une parmi l'addition et de la soustraction ;
et pour effectuer une deuxième opération arithmétique sur le premier élément, le deuxième élément et un troisième élément de la pluralité d'éléments afin de fournir une troisième sortie, les deuxième et troisième éléments étant séquentiels ;
et
stocker le premier élément de sortie, le deuxième élément de sortie et le troisième élément de sortie dans un vecteur de sortie (120) au cours d'un cycle unique d'exécution du processeur.

9. Appareil selon la revendication 8, dans lequel une unité d'opération arithmétique particulière parmi la pluralité d'unités d'opération arithmétique est couplée à un circuit logique à saturation configuré pour saturer une sortie de l'unité d'opération arithmétique particulière.

10. Appareil selon la revendication 8, dans lequel le processeur comprend en outre une logique de commande (210) configurée pour activer sélectivement une ou une pluralité de unités d'opération arithmétique de la pluralité d'unités d'opération arithmétique sur la base de l'instruction vectorielle, et dans lequel le premier élément de sortie et le deuxième élément de sortie sont fournis via l'une ou plusieurs unités d'opération arithmétique.

11. Appareil selon la revendication 8, dans lequel la première opération arithmétique est effectuée par une pluralité de sous-additionneurs (322 à 328), dans lequel chaque sous-additionneur de la pluralité de sous-additionneurs stocke un élément de sortie dans le vecteur de sortie.

12. Support non transitoire lisible par ordinateur comprenant des instructions qui, lorsqu'elles sont exécutées par un appareil selon l'une quelconque des revendications 8 à 11, amènent le processeur à exécuter le procédé selon l'une quelconque des revendications 1 à 7.
